# EUROPEAN PATENT APPLICATION

(11) **EP 3 150 476 A1**
(43) Date of publication of application: **05.04.2017**
(21) Application number: 16184246.3
(22) Date of filing: 16.08.2016
(51) Int. Cl.: B62K 25/06, B62K 5/02, B62K 5/05, B60T 1/00

(54) **ROCKING VEHICLE**

(30) Priority: 29.09.2015 JP 2015191731
(71) Applicant: Honda Motor Co., Ltd., Minato-ku Tokyo 107-8556 (JP)
(72) Inventor: Kawasaki, Yohei, Saitama, 351-0193 (JP); Tomura, Kineo, Saitama, 351-0193 (JP); Hosogoshi, Shinichi, Saitama, 351-0193 (JP); Shimizu, Kenzo, Saitama, 351-0193 (JP)
(74) Representative: Beder, Jens

(57) **Abstract**

To realize an interlock mechanism that regulates each operation of a brake mechanism and a rocking lock mechanism with a simple structure.

A rocking vehicle provided with a rear brake mechanism (141) and a rocking lock mechanism (90) that locks a rocking of a rocker mechanism that rocks a vehicle body is provided with a rear brake interlocking member (150) that connects a brake lever (123b) of the rear brake mechanism (141) and a drum (123a) via an operating-side cable (152) and an actuating-side cable (153) and a rocking lock interlocking member (151) that connects a rocking lock operating lever (130) of the rocking lock mechanism (90) and a caliper (92) via a link (146) and a rocking lock operation cable (131), and the rear brake interlocking member (150) regulates the movement in a rocking lock actuating direction of the rocking lock interlocking member (151) in a state in which the brake lever (123b) is located in a position other than a parking position.

## Description

The present invention relates to a rocking vehicle.

Heretofore, a rocking-type saddle-ride type vehicle provided with a brake mechanism (a rear wheel lock mechanism) used in parking and a rocking lock mechanism that locks a rocking of a vehicle body is known from JP-A No. 2005-313876. In JP-A No. 2005-313876, an interlock mechanism that electrically controls to prevent a brake mechanism from being operated in a state in which a rocking lock mechanism is operated is disclosed.

It is desirable that a rocking vehicle is provided with an interlock mechanism so as to enable regulating respective operations and nonoperations according to mutual operative states of a brake mechanism and a rocking lock mechanism, however, in the above-mentioned conventional type rocking vehicle, as electric interlock is adopted, great costs are required.

The present invention is made in view of the above-mentioned situation and an object of the present invention is to enable realizing an interlock mechanism that regulates the operation of a brake mechanism and a rocking lock mechanism with a simple structure.

To achieve the object, the present invention is based upon a rocking vehicle provided with a brake mechanism that locks a wheel and a rocking lock mechanism that locks a rocking of a rocker mechanism which locks a vehicle body, and has a characteristic that a brake interlocking member that connects a brake operating part of the brake mechanism and a brake actuating part via respective relay members and a rocking lock interlocking member that connects a rocking lock operating part of the rocking lock mechanism and a rocking lock actuating part via respective relay members are provided and the brake interlocking member regulates the movement in a rocking lock actuating direction (Ds1) of the rocking lock interlocking member in a state in which the brake operating part is located in a position other than a parking position.

According to the present invention, the rocking vehicle is provided with the brake interlocking member that connects the brake operating part of the brake mechanism and the brake actuating part via the respective relay members and the rocking lock interlocking member that connects the rocking lock operating part of the rocking lock mechanism and the rocking lock actuating part via the respective relay members, and the brake interlocking member regulates the movement in the rocking lock actuating direction of the rocking lock interlocking member in the state in which the brake operating part is located in the position other than the parking position. Hereby, in the state in which the brake operating part is located in the position other than the parking position, the movement in the rocking lock actuating direction of the rocking lock interlocking member can be mechanically regulated by the brake interlocking member. Therefore, an interlock mechanism that regulates the operation of the brake mechanism and the rocking lock mechanism can be realized with a simple structure.

Besides, the present invention has a characteristic that a case that houses the brake interlocking member and the rocking lock interlocking member is provided, the case is provided with guide parts that respectively guide the movement of the brake interlocking member and the rocking lock interlocking member and the case regulates the movement of the brake interlocking member and the movement of the rocking lock interlocking member.

According to the present invention, the case that houses the brake interlocking member and the rocking lock interlocking member is provided with the guide parts that respectively guide the movement of the brake interlocking member and the rocking lock interlocking member and regulates the movement of the brake interlocking member and the rocking lock interlocking member. Hereby, as the movement of the brake interlocking member and the rocking lock interlocking member can be regulated utilizing the case of the brake interlocking member and the rocking lock interlocking member, an interlock mechanism can be realized with a simple structure.

Moreover, the present invention has a characteristic that the brake interlocking member and the rocking lock interlocking member are arranged with moving directions (Db, Ds) when they are operated crossing, the brake interlocking member is provided with a movement regulating part located on a course in the rocking lock actuating direction (Ds1) of the rocking lock interlocking member in a state in which the brake operating part is located in the position other than the the parking position and in a state in which the brake operating part is located in the parking position, the brake interlocking member is moved and the movement regulating part is off the course.

According to the present invention, in the state in which the brake operating part is located in the parking position, the brake interlocking member is moved and the movement regulating part of the brake interlocking member is off the course in the rocking lock actuating direction of the rocking lock interlocking member. Hereby, a position of the movement regulating part can be chung by the movement of the rocking lock interlocking member and as the movement regulating part is off the course of the rocking lock interlocking member in the state of the parking position, the rocking lock interlocking member can be moved in the rocking lock actuating direction.

Further, the present invention has a characteristic that in a state in which the brake operating part is located in the parking position and the rocking lock operating part is located in a rocking lock position, the brake interlocking member regulates the movement in a rocking lock releasing direction (Ds2) of the rocking lock interlocking member.

According to the present invention, in the state in which the brake operating part is located in the parking position and the rocking lock operating part is located in the rocking lock position, the brake interlocking member regulates the movement in the rocking lock releasing direction of the rocking lock interlocking member. Therefore, a release of the rocking lock mechanism can be regulated by the brake interlocking member in a state in which both the brake mechanism and the rocking lock mechanism are operated and the interlock mechanism can be realized with a simple structure.

Furthermore, the present invention has a characteristic that as a locking part of the brake operating part is locked in a locked part of the rocking lock interlocking member, the movement in the rocking lock releasing direction (Ds2) of the rocking lock interlocking member is regulated.

According to the present invention, the movement in the rocking lock releasing direction of the rocking lock interlocking member can be regulated with a simple configuration that the locking part of the brake operating part is locked in the locked part of the rocking lock interlocking member.

Furthermore, the present invention has a characteristic that a brake release operating part that releases a lock of the wheel by the brake mechanism in the state in which the brake operating part is located in the parking position and the rocking lock operating part is located in the rocking lock position is provided.

According to the present invention, the brake release operating part that releases the lock of the wheel by the brake mechanism in the state in which the brake operating part is located in the parking position and the rocking lock operating part is located in the rocking lock position is provided. Hereby, only the brake mechanism is released and the vehicle can be pushed while a rider walks by operating the brake release operating part in a state in which both the brake mechanism and the rocking lock mechanism are operated.

Furthermore, the present invention has a characteristic that a housing which houses the brake interlocking member and the rocking lock interlocking member and which is provided with guide parts that respectively guide the movement of the brake interlocking member and the rocking lock interlocking member is provided, the brake release operating part is connected to the housing and when the brake release operating part is operated, the brake interlocking member is moved in a brake releasing direction (Db2) integrally with the housing.

According to the present invention, the brake release operating part is connected to the housing that houses the brake interlocking member and the rocking lock interlocking member, when the brake release operating part is operated, the brake interlocking member is moved in the brake releasing direction integrally with the housing. Hereby, as the housing is moved by the brake release operating part, a lock of the wheel can be released and the lock of the wheel can be released without operating the brake operating part.

Further, the present invention has a characteristic that a case body that houses the housing is provided, the case body is provided with an opening which a position regulating projection protruded from the rocking lock interlocking member passes and the movement of the housing by operating the brake release operating part is regulated by making the position regulating projection abut on the opening.

According to the present invention, the case body that houses the housing is provided with the opening which the position regulating projection protruded from the rocking lock interlocking member passes and as the position regulating projection is made to abut on the opening, the movement of the housing by operating the brake release operating part is regulated. Hereby, the operation of the brake release operating part can be regulated with a simple configuration that the case body and the position regulating projection of the rocking lock interlocking member are made to abut.

Furthermore, the present invention has a characteristic that the movement in the rocking lock releasing direction (Ds2) of the rocking lock interlocking member is regulated in a state in which a lock of the wheel by the brake mechanism is released by the brake release operating part.

According to the present invention, in the state in which the lock of the wheel by the brake mechanism is released by the brake release operating part, the movement in the rocking lock releasing direction of the rocking lock interlocking member is regulated. Hereby, the rocking lock mechanism can be prevented from being released in a state in which the rocking lock mechanism is operated and the vehicle body can be pushed while a user walks.

Furthermore, the present invention has a characteristic that the housing which houses the brake interlocking member and the rocking lock interlocking member and which is provided with guide parts that respectively guide the movement of the brake interlocking member and the rocking lock interlocking member and the case body that houses the housing are provided, the case body is provided with the opening which the position regulating projection protruded from the rocking lock interlocking member passes and the movement in the rocking lock releasing direction (Ds2) of the rocking lock interlocking member is regulated by making the position regulating projection abut on the opening.

According to the present invention, the case body that houses the housing is provided, the case body is provided with the opening which the position regulating projection protruded from the rocking lock interlocking member passes, and the movement in the rocking lock releasing direction of the rocking lock interlocking member is regulated by making the position regulating projection abut on the opening. Hereby, the operation of the rocking lock operating part can be regulated with a simple configuration that the case body and the position regulating projection of the rocking lock interlocking member are made to abut.

In the rocking vehicle according to the present invention, the interlock mechanism that regulates the operation of the brake mechanism and the operation of the rocking lock mechanism can be realized with the mechanical simple structure.

Besides, the movement of the brake interlocking member and the movement of the rocking lock interlocking member can be regulated with the simple structure utilizing the case of the brake interlocking member and the rocking lock interlocking member.

Moreover, as the movement regulating part is off the course of the rocking lock interlocking member in a state of the parking position, the rocking lock interlocking member can be moved in the rocking lock actuating direction.

Further, a release of the rocking lock mechanism can be regulated by the brake interlocking member and the interlock mechanism can be realized with the simple structure.

Furthermore, the movement in the rocking lock releasing direction of the rocking lock interlocking member can be regulated with the simple configuration that the locking part of the brake operating part is locked in the locked part of the rocking lock interlocking member.

Furthermore, only the brake mechanism is released by operating the brake release operating part and the vehicle can be pushed while the user walks.

Furthermore, a lock of the wheel can be released by moving the housing by the brake release operating part and the lock of the wheel can be released without operating the brake operating part.

Further, the operation of the brake release operating part can be regulated with the simple configuration that the case body and the position regulating projection of the rocking lock interlocking member are made to abut.

Furthermore, the rocking lock mechanism can be prevented from being released in the state in which the rocking lock mechanism is operated and the vehicle body can be pushed while the user walks.

Furthermore, the operation of the rocking lock operating part can be regulated with the simple configuration that the case body and the position regulating projection of the rocking lock interlocking member are made to abut.
Fig. 1 is a left side view showing a rocking vehicle equivalent to an embodiment of the present invention;
Fig. 2 is a right side view showing the rocking vehicle;
Fig. 3 is a perspective view showing the rocking vehicle viewed from the left front side;
Fig. 4 is a front view showing the rocking vehicle;
Fig. 5 is a left side view showing the front of the rocking vehicle;
Fig. 6 is a front view showing a rocker mechanism and its circumferential parts;
Fig. 7 is a perspective view showing the rocker mechanism and its circumferential parts respectively viewed from the left front side;
Fig. 8 is a rear view showing the rocker mechanism and its circumferential parts;
Fig. 9 is a schematic diagram showing the configuration of a lock mechanism of the rocking vehicle;
Fig. 10 is a rear view showing an upper part of a main frame and its circumferential parts;
Fig. 11 is a rear view showing a rocking lock operating lever and its circumferential parts;
Fig. 12 is a sectional view viewed along a line XII-XII shown in Fig. 1;
Fig. 13 is a table showing each operative state of a rear brake mechanism and a rocking lock mechanism in each operative state of the lock mechanism;
Fig. 14 is a perspective view showing an inhibitor;
Fig. 15 is a plan view showing the inhibitor;
Fig. 16 is a plan view showing the inhibitor in a state in which a cover is removed;
Fig. 17 is a sectional view viewed along a line A-A shown in Fig. 14;
Fig. 18 is a plan view showing a housing;
Figs. 19 show a rear brake interlocking member, Fig. 19(a) is a plan view, and Fig. 19(b) is a side view;
Fig. 20 is a sectional view viewed along a line B-B shown in Fig. 14;
Fig. 21 is a sectional view viewed along a line C-C shown in Fig. 14;
Fig. 22 is a plan view showing a rocking lock interlocking member;
Fig. 23 is a plan view showing the inhibitor in "a rear brake state" of the lock mechanism;
Fig. 24 is a sectional view viewed along the line A-A shown in Fig. 14 in "the rear brake state";
Fig. 25 is a sectional view viewed along the line B-B shown in Fig. 14 in "the rear brake state";
Fig. 26 is a sectional view viewed along the line C-C shown in Fig. 14 in "the rear brake state";
Fig. 27 is a plan view showing the inhibitor in "a rocking locked state";
Fig. 28 is a sectional view viewed along the line B-B shown in Fig 14 in "the rocking locked state";
Fig. 29 is a sectional view viewed along the line C-C shown in Fig. 14 in "the rocking locked state";
Fig. 30 is a plan view showing the inhibitor in "a pushing state while walking";
Fig. 31 is a sectional view viewed along the line A-A shown in Fig. 14 in "the pushing state while walking";
Fig. 32 is a sectional view viewed along the line B-B shown in Fig. 14 in "the pushing state while walking";
Fig. 33 is a sectional view viewed along the line C-C shown in Fig 14 in "the pushing state while walking";
Fig. 34 shows transition among each state of the inhibitor;
Fig. 35 is a table showing results when each operation is performed in each state of the inhibitor;
Fig. 36 is a perspective view showing circumferential structure of a link type suspension mechanism on the side of a front wheel;
Fig. 37 shows the configuration of a suspension lock operating lever and its circumferential parts;
Fig. 38 is a side view showing the suspension lock operating lever and a key cylinder; and
Fig. 39 shows a state in which the rocking lock operating lever is located in a rocking lock position.

Referring to the drawings, one embodiment of the present invention will be described below. In the description, directions such as longitudinal one, lateral one and vertical one shall be the same as directions in a vehicle unless otherwise specified. Besides, a reference sign FR shown in some drawings denotes the front side of the vehicle, a reference sign UP denotes the upside of the vehicle, and a reference sign LH denotes the left side of the vehicle.

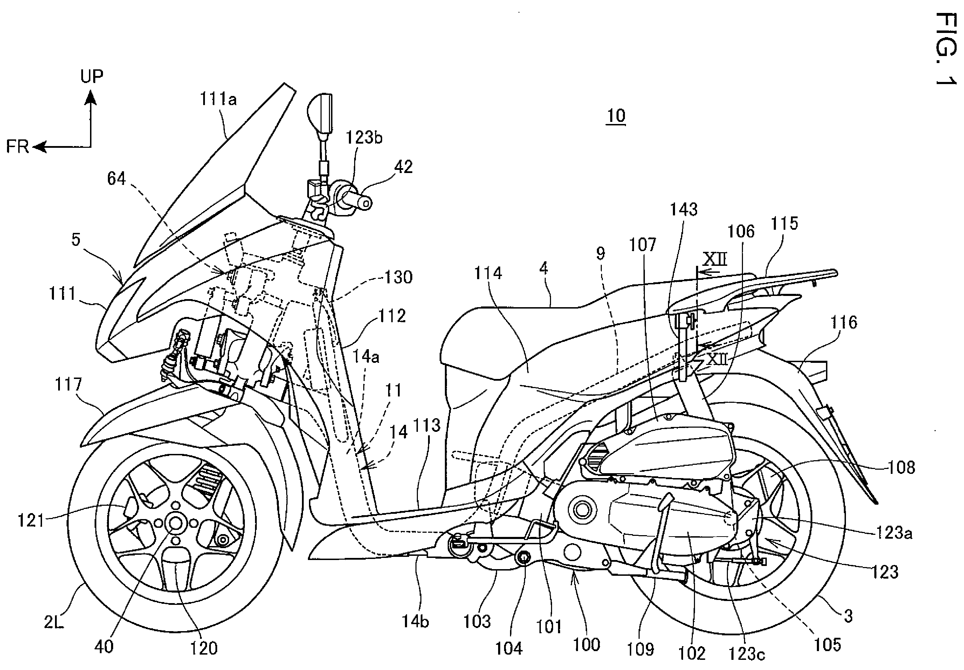

Fig. 1 is a left side view showing a rocking vehicle according to an embodiment of the present invention. In Fig. 1, only the left one of a pair provided laterally is shown.

The rocking vehicle 10 is a three-wheeled vehicle provided with a body frame 11, a pair of front wheels 2L, 2R respectively laterally provided on the downside of the front of the body frame 11, one rear wheel 3 provided in the center in a vehicle width direction in the rear of the rocking vehicle 10 and a power unit 100 that drives the rear wheel 3 which is a driving wheel. Besides, the rocking vehicle 10 is provided with a rocker mechanism 64 that rocks a vehicle body on the front side of the body frame 11.

The rocking vehicle 10 is a saddle-ride type vehicle provided with a seat 4 for an occupant to be seated with the occupant straddling the saddle-ride type vehicle on the rear side. Besides, the rocking vehicle 10 is provided with a body cover 5 that covers the body frame 11.

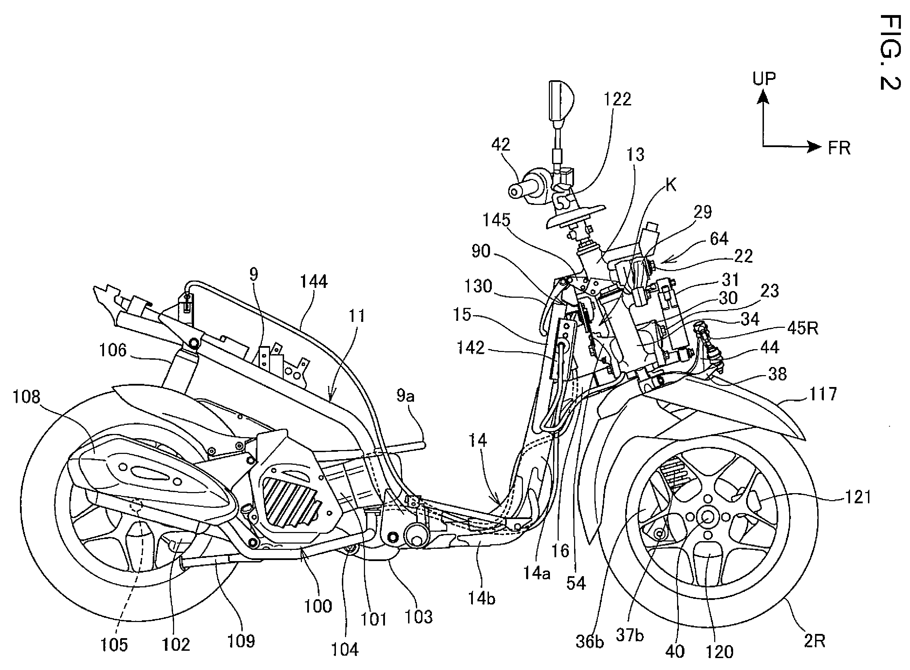

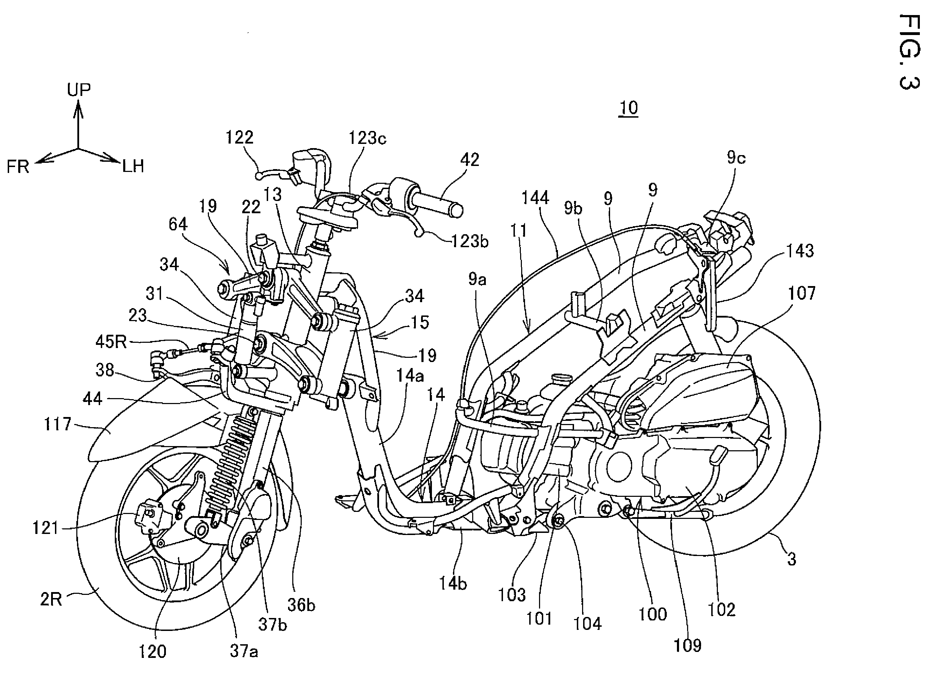

Fig. 2 is a right side view showing the rocking vehicle 10. Fig. 3 is a perspective view showing the rocking vehicle 10 viewed from the left front side. Figs. 2 and 3 show a state in which exterior parts such as the seat 4 and the body cover 5 are removed. Besides, in Fig. 2, peripheral structure of the left front wheel 2L is not shown.

As shown in Figs. 1 to 3, the body frame 11 is provided with a head pipe 13 at its front end, a main frame 14 extended downward in a rear direction from the head pipe 13 and a pair of right and left rear frames 9 extended upward in the rear direction from a rear end of the main frame 14.

The main frame 14 is provided with a main frame front 14a extended downward in the rear direction from the head pipe 13 and a main frame rear 14b substantially horizontally extended backward from a lower end of the main frame front 14a. The rear frames 9 are coupled in the vehicle width direction by plural cross members 9a, 9b, 9c.

The power unit 100 is arranged at the back of the main frame 14 and on the downsides of the rear frames 9. The power unit 100 is a unit swing type in which an engine 101 and a transmission case 102 housing a belt type continuously variable transmission mechanism (not shown) are integrated, and is also provided with a function as a swing arm that supports the rear wheel 3.

The power unit 100 is coupled to the rear end of the main frame 14 via a link member 103 coupled to the front of the power unit and can be vertically swung with a pivot 104 provided to the link member 103 in the center.

The transmission case 102 is extended to the left side of the rear wheel 3 on the downside of the left rear frame 9 and the rear wheel 3 is joumaled to a rear wheel axle 105 provided to a rear end of the transmission case 102. A rear suspension 106 is laid between the rear end of the transmission case 102 and the rear frame 9. An air cleaner box 107 of the engine 101 is provided on the upside of the transmission case 102. A muffler 108 of the engine 101 is arranged on the right side of the rear wheel 3.

A main stand 109 for parking the rocking vehicle 10 in an upright posture is supported by a lower part of the power unit 100.

The body cover 5 is provided with a front cover 111 that covers the rocker mechanism 64 and the head pipe 13 from the front side and the side, a leg shield 112 that covers the main frame front 14a, a step floor 113 that covers the main frame rear 14b from the upside and a rear cover 114 that covers the rear frames 9 on the downside of the seat 4. A wind screen 111a is provided to the front cover 111.

A grab bar 115 for a pillion passenger seated on the rear of the seat 4 to grasp is provided to rear ends of the rear frames 9. The grab bar 115 is located on the right and left sides of the rear of the seat 4.

The rear wheel 3 is covered by a rear fender 116 from the upside. The front wheels 2L, 2R are covered with a pair of left and right front fenders 117 from each upside.

As shown in Fig. 1, for a braking device of each front wheel 2L, 2R, the rocking vehicle 10 is provided with a brake disc 120 provided to each front wheel 2L, 2R, a brake caliper 121 to which oil pressure is applied via a brake hose and a front wheel brake lever 122 (see Fig. 2) to which operation for the brake caliper 121 is input. The front wheel brake lever 122 is provided to an end (an end on the right side) of one of the right and left sides of a handlebar 42 for steering.

Besides, for a rear wheel braking device 123, the rocking vehicle 10 is provided with a drum brake. The rear wheel braking device 123 is provided with a drum (a brake actuating part) 123a provided to the rear wheel 3, a brake lever (a brake manipulating part) 123b to which operation for the drum 123a is input and a brake operation cable 123c that connects the brake lever 123b and the drum 123a. The brake lever 123b is provided to an end of the other (an end on the left side) of the right and left sides of the handlebar 42 for steering. When the brake lever 123b is operated, a brake shoe provided inside the drum 123a is pressed on an inner circumference of the drum 123a and the rear wheel 3 is braked.

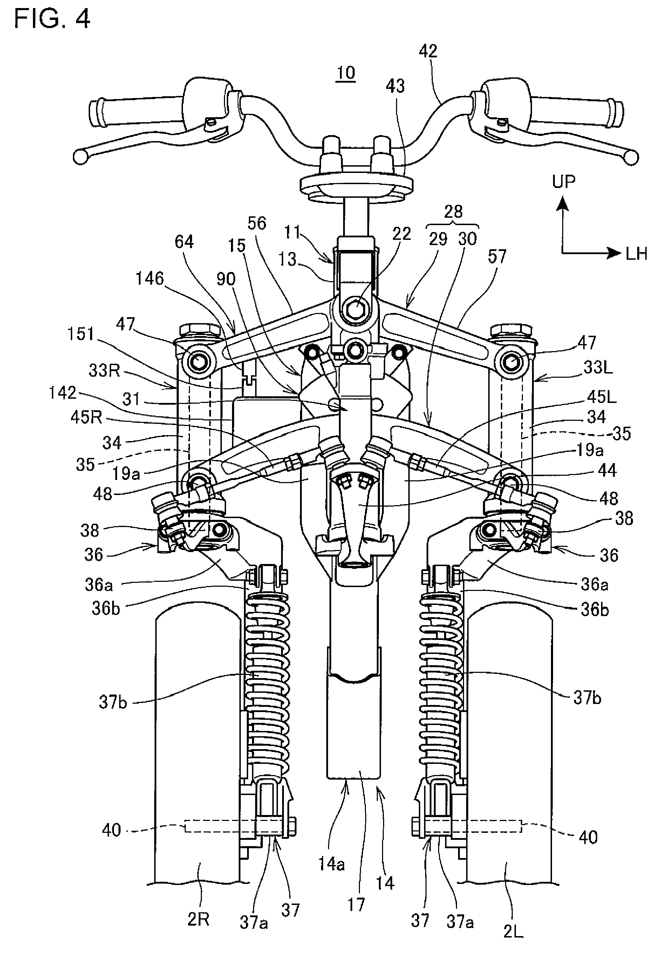

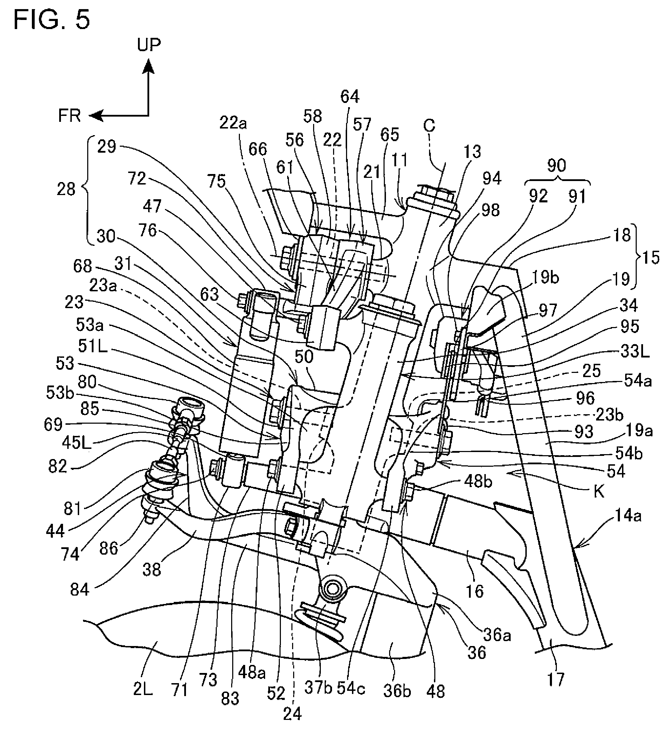

Fig. 4 is a front view showing the rocking vehicle 10 viewed from the front side. Fig. 5 is a left side view showing the front of the rocking vehicle 10. Detailedly, Fig. 5 is a front view viewed along an axis 22a of an upper rocker shaft 22 described later. However, in Fig. 5, an inhibitor 142 described later is not shown.

The cylindrical head pipe 13 is arranged in a state in which its axis C is inclined backward in a side view. The head pipe 13 is located in the center in the vehicle width direction of the rocking vehicle 10.

The main frame front 14a is provided with an upper main frame 15 extended backward and downward from the back of an upper part of the head pipe 13, a lower main frame 16 extended backward and downward from the back of a lower part of the head pipe 13 and a rear main frame 17 extended downward from a rear end of the lower main frame 16. The lower main frame 16 is arranged in a posture substantially perpendicular to the head pipe 13. The rear main frame 17 is extended backward and downward with greater inclination than the lower main frame 16.

The upper main frame 15 is provided with a frame upper end 18 extended backward in substantial parallel with the lower main frame 16 from the head pipe 13 and a pair of right and left forked frames 19 forked laterally from a rear end of the frame upper end 18 and extended downward.

The forked frames 19 are arranged with the rear lower with the substantially same inclination as the lower main frame 16 and are opposite to the back of the head pipe 13. An upper end of each forked frame 19 is connected to the side of the rear end of the frame upper end 18 and a lower end of each forked frame is connected to the side of an upper end of the rear main frame 17. Each forked frame 19 is provided with an intermediate part 19a extended sideways to be outside the head pipe 13 in the vehicle width direction and the intermediate parts 19a are extended mutually in substantial parallel.

That is, space K at the back of the head pipe which is enclosed by the head pipe 13, the upper main frame 15 and the lower main frame 16 is formed between the head pipe 13 and the main frame front 14a in a side view.

A columnar support 21 protruded forward is provided to the front of the upper part of the head pipe 13 and the upper rocker shaft 22 like a bolt (the center of a rocking of an upper arm) is fastened and fixed to the support 21. The upper rocker shaft 22 is arranged in a posture in which the rear is lower in a side view and its end is screwed to the support 21. Detailedly, in the side view, an inclination in which the rear is lower of the axis 22a of the upper rocker shaft 22 is slightly smaller than an inclination of a plane (not shown) perpendicular to the axis C of the head pipe 13. Fig. 4 is the front view showing the front of the rocking vehicle 10 viewed along the axis 22a of the upper rocker shaft 22.

A lower rocker shaft (the center of a rocking of a lower arm) 23 extended forward and backward from the head pipe 13 is provided to the lower part of the head pipe 13. The lower rocker shaft 23 and the upper rocker shaft 22 are arranged in the center in the vehicle width direction. The lower rocker shaft 23 is arranged in parallel with the upper rocker shaft 22 and is extended so that the rear is lower. Detailedly, the lower rocker shaft 23 is provided with a first lower rocker shaft 23a diagonally extended forward and upward from the front of the head pipe 13 and a second lower rocker shaft 23b diagonally extended backward and downward from the back of the head pipe 13. The first lower rocker shaft 23a and the second lower rocker shaft 23b are coaxially arranged.

A columnar front support 24 protruded forward is provided to the front of the lower part of the head pipe 13. The first lower rocker shaft 23a is formed in the shape of a bolt and its end is fastened and fixed to the front support 24 from the front side.

A columnar rear support 25 protruded backward is provided to the back of the lower part of the head pipe 13. The second lower rocker shaft 23b is formed in the shape of a bolt and its end is fastened and fixed to the rear support 25 from the rear side.

A rocker arm 28 laterally rockable is provided in front of the head pipe 13.

The rocker arm 28 is provided with an upper arm 29 laterally rockable with the upper rocker shaft 22 in the center and a lower arm 30 laterally rockable with the lower rocker shaft 23 in the center.

A roll damper (a damper) 31 that inhibits displacement (displacement in a direction of a roll) around the upper rocker shaft 22 and the lower rocker shaft 23 of the rocker arm 28 is provided in front of the rocker arm 28.

The upper arm 29 and the lower arm 30 are laterally (in the vehicle width direction) extended from the center in the vehicle width direction, and a left front wheel supporting member 33L and a right front wheel supporting member 33R that respectively turnably support the left and right front wheels 2L, 2R are respectively supported by respective left and right ends of the upper arm 29 and the lower arm 30.

The left front wheel supporting member 33L and the right front wheel supporting member 33R are provided with side pipes 34 coupled to the upper arm 29 and the lower arm 30, steering shafts 35 (see Fig. 4) joumaled inside the side pipes 34, bottom bridges 36 fixed to respective lower ends of the steering shafts 35 and link type suspension mechanisms (suspensions) 37 coupled to the bottom bridges 36.

The bottom bridge 36 is laterally turnable with the steering shaft 35 as an axis in the center. The bottom bridge 36 is provided with a backward extended part 36a extended inside in the vehicle width direction and backward and a support arm 36b extended downward from the rear of the backward extended part 36a. The tie rod coupling arm 38 extended forward on the upside of each front wheel 2L, 2R is attached to the front of the bottom bridge 36.

The link type suspension mechanism 37 is provided with a bottom link 37a extended forward from a lower end of the support arm 36b and a cylindrical shock absorber 37b laid between a front end of the bottom link 37a and the backward extended part 36a. The bottom link 37a is vertically rockably supported with its rear end in the center and each front wheel 2L, 2R is joumaled to an axle 40 provided to the front end of the bottom link 37a.

A handlebar shaft (not shown) is joumaled in the head pipe 13. A handlebar 42 for the occupant to operate is attached to an upper end of the handlebar shaft via a handlebar post 43.

The handlebar shaft is extended downward through the head pipe 13 and a tie rod support arm 44 integrally rotated with the handlebar shaft is fixed to a lower end of the handlebar shaft. The tie rod support arm 44 is coupled to the tie rod coupling arms 38 via a pair of left and right tie rods 45L, 45R extended in the vehicle width direction.

When the handlebar 42 is steered, the bottom bridge 36 is turned with the steering shaft 35 as an axis in the center via the tie rod support arm 44, the tie rod 45L, 45R and the tie rod coupling arm 38, and hereby, the front wheels 2L, 2R are operated in a direction in which the handlebar 42 is steered.

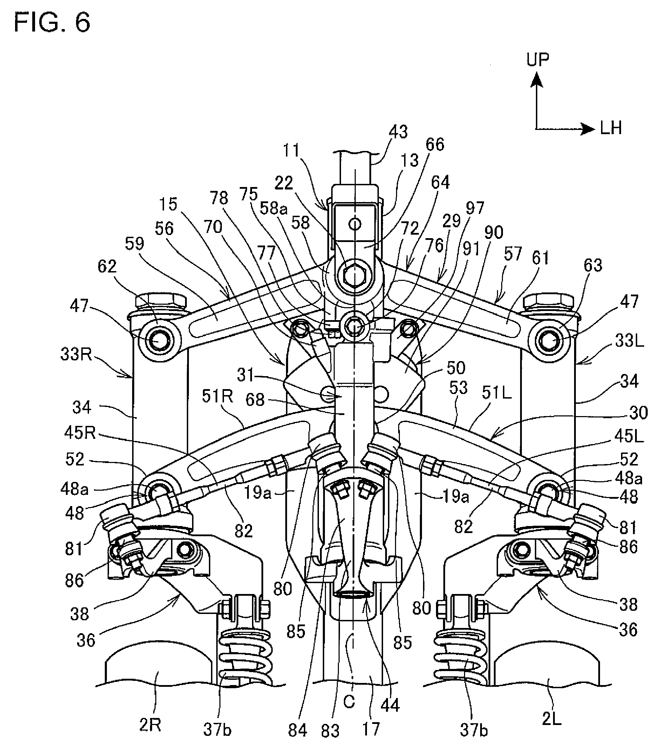

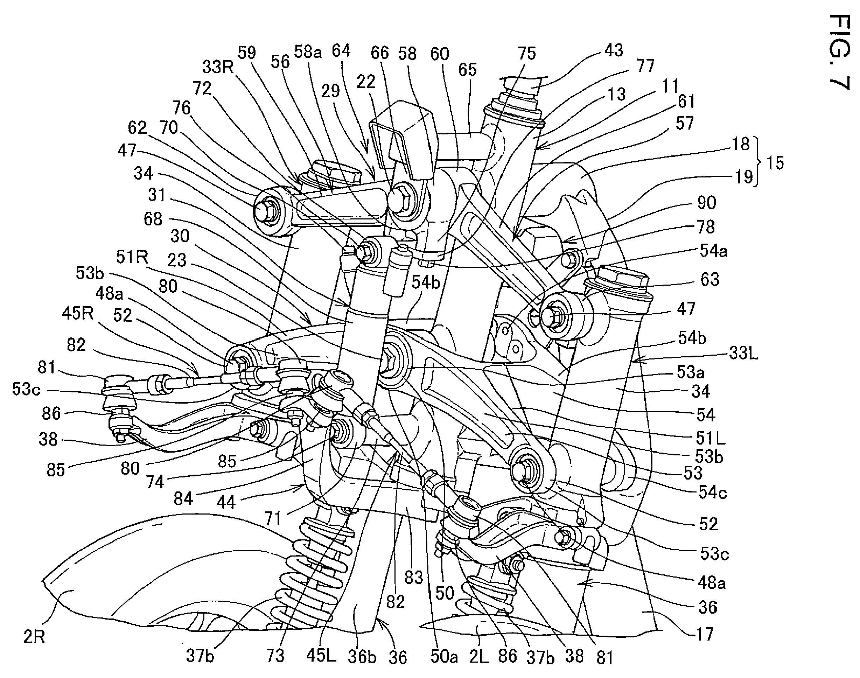

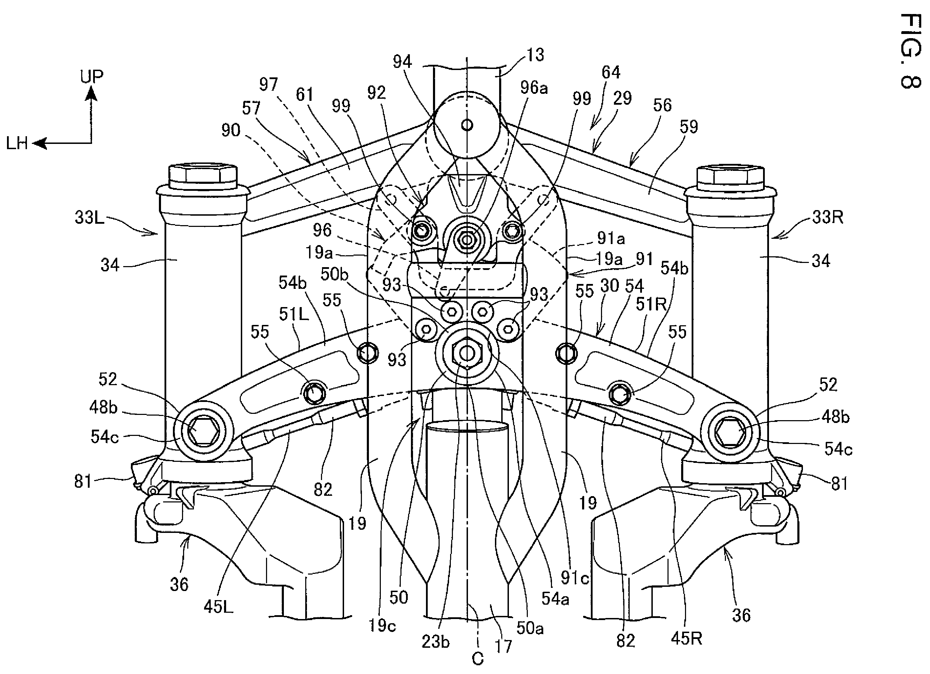

Fig. 6 is a front view showing peripheral parts of the rocker mechanism 64. Fig. 7 is a perspective view showing the peripheral parts of the rocker mechanism 64 viewed from the left front side. Fig. 8 is a rear view showing the peripheral parts of the rocker mechanism 64. In Figs. 6 to 8, the inhibitor 142 described later is not shown.

The cylindrical head pipe 13 is arranged in a state in which its axis C is inclined backward in a side view. The head pipe 13 is located in the center in the vehicle width direction of the rocking vehicle 10.

As shown in Figs. 4 to 8, the side members 34 are located on the right and left sides of the head pipe 13 and are arranged in parallel with the head pipe 13.

Each side member 34 is provided with an upper coupling shaft 47 extended forward from the front of an upper part and a lower coupling shaft 48 extended forward and backward from a front face and a rear face of a lower part. The upper coupling shaft 47 and the lower coupling shaft 48 are arranged in parallel with the upper rocker shaft 22 and the lower rocker shaft 23.

The upper coupling shaft 47 is formed in the shape of a bolt and its end is fastened and fixed to the upper part of the side member 34 from the front side.

Each lower coupling shaft 48 is provided with a first lower coupling shaft 48a provided to the front face of the side member 34 and a second lower coupling shaft 48b provided to the rear face of the side member 34. The first lower coupling shaft 48a is formed in the shape of a bolt and its end is fastened and fixed to the side member 34 from the front side. The second lower coupling shaft 48b is formed in the shape of a bolt and its end is fastened and fixed to the side member 34 from the rear side. The first lower coupling shaft 48a and the second lower coupling shaft 48b are coaxially provided.

The lower arm 30 is integrally provided with a lower rocking central part 50 joumaled to the lower rocker shaft 23 and lower arm parts (left and right arms) 51L, 51R respectively extended laterally from the lower rocking central part 50 and coupled to the side members 34. The lower arm parts 51L, 51R are laterally symmetrically formed with the lower rocking central part 50 in the center.

The lower rocking central part 50 is cylindrically formed and is joumaled to the lower rocker shaft 23 via a bearing fitted to its inner circumference. A lower end 50a (see Fig. 7) of a periphery of the lower rocking central part 50 is located in the center in the vehicle width direction.

Each lower arm part 51L, 51R is provided with a cylindrical end 52 outside in the vehicle width direction. Each lower arm part 51 L, 51 R is joumaled to the lower coupling shaft 48 via a bearing fitted to an inner circumference of the end 52.

The lower arm parts 51L, 51R are inclined so that they are located lower farther in the vehicle width direction from the lower rocking central part 50 and the ends 52 are located on the downsides of the lower rocking central part 50. That is, the lower arm is formed in an inverse V type in a front view.

Besides, the lower arm 30 is provided with a front-side lower arm 53 arranged in front of the head pipe 13 and a rear-side lower arm 54 arranged at the back of the head pipe 13. The lower arm 30 is provided with the front-side lower arm 53 and the rear-side lower arm 54 longitudinally holding the head pipe 13. The front-side lower arm 53 and the rear-side lower arm 54 are connected by plural bolts 55 (see Fig. 8) inserted into the rear-side lower arm 54 from the rear side.

Detailedly, the front-side lower arm 53 is provided with a front-side rocking central part 53ajoumaled to the first lower coupling shafts 48a, right and left front-side arm parts 53b extended on front sides of the side members 34 from the front-side rocking central part 53a and front-side ends 53c joumaled to the first lower coupling shafts 48a.

The rear-side lower arm 54 is provided with a rear-side rocking central part 54a joumaled to the second lower coupling shafts 48b, right and left rear-side arm parts 54b extended on rear sides of the side members 34 from the rear-side rocking central part 54a and rear-side ends 54c joumaled to the second lower coupling shafts 48b.

The lower rocking central part 50 is configured by the front-side rocking central part 53a and the rear-side rocking central part 54a. The lower arm parts 51L, 51R are configured by the front-side arm parts 53b and the rear-side arm parts 54b. The ends 52 are configured by the front-side ends 53c and the rear-side ends 54c.

The upper arm 29 is laterally divided and is provided with a right upper arm 56 extended to the right (one-side) side member 34 from the upper rocker shaft 22 and a left upper arm 57 extended to the left (the other-side) side member 34 from the upper rocker shaft 22.

The right upper arm 56 is provided with a first upper rocking central part 58 joumaled to the upper rocker shaft 22 and an upper anterior arm part 59 extended rightward from the first upper rocking central part 58 and coupled to the right side member 34.

The left upper arm 57 is provided with a second upper rocking central part 60 joumaled to the upper rocker shaft 22 at the back of the first upper rocking central part 58 and an upper posterior arm part 61 extended leftward from the second upper rocking central part 60 and coupled to the left side member 34.

That is, the right upper arm 56 and the left upper arm 57 are longitudinally arranged on the upper rocker shaft 22.

The first upper rocking central part 58 is cylindrically formed and is joumaled to the upper rocker shaft 22 via a bearing fitted to its inner circumference. A lower end 58a of a periphery of the first upper rocking central part 58 is located in the center in the vehicle width direction.

The upper anterior arm part 59 is provided with a cylindrical end 62 at an outer end in the vehicle width direction. The upper anterior arm part 59 is joumaled to the upper coupling shaft 47 of the right side member 34 via a bearing fitted to an inner circumference of the end 62.

The upper posterior arm part 61 is provided with a cylindrical end 63 at an outer end in the vehicle width direction. The upper posterior arm part 61 is journaled to the upper coupling shaft 47 of the left side member 34 via a bearing fitted to an inner circumference of the end 63.

The right upper arm 56 and the left upper arm 57 are inclined so that they are located lower farther in the vehicle width direction from the upper rocker shaft 22 and the ends 62, 63 are located on the downsides of the first upper rocking central part 58 and the second upper rocking central part 60. The ends 62, 63 are located in the same vertical positions. That is, the upper arm 29 configured by joining the right upper arm 56 and the left upper arm 57 is formed in an inverse V type in a front view.

Besides, the right upper arm 56 is curved so that it is located on the rear side outside in the vehicle width direction, the left upper arm 57 is curved so that it is located on the front side outside in the vehicle width direction, and the ends 62, 63 are located in the same longitudinal positions.

In this embodiment, the rocker mechanism 64 is configured in the vicinity of the head pipe 13 by rockably supporting the lower arm 30 by the head pipe 13 via the lower rocker shaft 23, rockably supporting the right upper arm 56 and the left upper arm 57 by the head pipe 13 via the upper rocker shaft 22 and turnably coupling the side members 34 to the lower arm 30 and the upper arm 29 via the upper coupling shafts 47 and the lower coupling shafts 48.

That is, the rocker mechanism 64 is a multinodal link mechanism having the head pipe 13, the lower arm 30, the right upper arm 56, the left upper arm 57 and the side members 34 as a node (a link) and having the lower rocker shaft 23, the upper rocker shaft 22, the upper coupling shafts 47 and the lower coupling shafts 48 as a turning shaft (a rocking shaft).

The rocking vehicle 10 is laterally swung by steering operation of the handlebar 42 and the displacement of the center of gravity by the occupant in an inclined state. Detailedly, when the rocking vehicle 10 is inclined, the head pipe 13 is inclined with the lower rocker shaft 23 in the center, the side members 34 are inclined with the upper arm 29 and the lower arm 30 in the center, and the front wheels 2L, 2R closely come in contact with the ground in an inclined state. That is, the front wheels 2L, 2R are swung via the upper arm 29 and the lower arm 30 in accordance with the rocking of the body frame 11. In this state, the upper arm 29 and the lower arm 30 are displaced in an inclined direction in a state in which they are kept substantially horizontal with the ground and the head pipe 13 is inclined at the substantially same angle as the side members 34. That is, in a state in which the rocking vehicle 10 is inclined, the whole except the upper arm 29 and the lower arm 30 is integrally inclined in the front of the rocking vehicle 10.

The head pipe 13 is provided with a forward extended bar 65 extended forward through the upside of the upper arm 29 at its upper end and a plate like stay 66 extended downward toward the front side of the first upper rocking central part 58 of the right upper arm 56 is provided at a front end of the forward extended bar 65.

The upper rocker shaft 22 in the shape of a bolt pierces the stay 66 from the front side, its head abuts on the front of the stay 66, and the first upper rocking central part 58 and the second upper rocking central part 60 are held between the stay 66 and the support 21. That is, the upper rocker shaft 22 is supported by the stay 66 and the support 21 from both sides. Therefore, the supporting rigidity of the upper arm 29 can be enhanced.

The roll damper 31 is a liquid-operated damper formed in the shape of a vertically longer cylinder. The roll damper 31 is provided with a cylindrical cylinder part 68 both ends of which are closed, a piston rod 69 which is inserted into the cylinder part 68 from a lower end of the cylinder part 68 and which houses a piston (not shown) at an upper end inside the cylinder part 68, a spring (not shown) inserted between the bottom side of the piston and the bottom of the cylinder part 68 in a compressed state and an adjustment mechanism 70 that adjusts an extent of damping action of the roll damper 31.

In the cylinder part 68, oil as fluid that damps a motion of the piston is sealed. The cylinder part 68 is axially partitioned into a first fluid chamber and a second fluid chamber by the piston.

The piston is provided with an oil channel through which oil can pass in an axial direction of the piston. The roll damper 31 functions as a damper because the motion of the piston is inhibited by the resistance of oil caused in the oil channel according to the movement of the piston.

The adjustment mechanism 70 is a mechanism that varies the area of the oil channel connecting the first fluid chamber and the second fluid chamber for example so as to vary the resistance of oil.

To reciprocate the roll damper 31 in its extended direction by relatively displacing the cylinder part 68 and the piston rod 69, a load that compresses the spring is required.

The roll damper 31 is provided with a cylindrical lower fulcrum 71 connected to a lower end of the head pipe 13 and a cylindrical upper fulcrum 72 connected to the upper arm 29.

The lower fulcrum 71 is provided to a lower end of the piston rod 69. The upper fulcrum 72 is provided to an upper end of the cylinder part 68.

The head pipe 13 is provided with a damper stay 73 in the shape of a bar extended forward from a position under the lower rocker shaft 23 at the front. A front end of the damper stay 73 is located in front of a front end of the lower arm 30. A lower damper supporting shaft (a damper supporting part) 74 extended forward in parallel with the lower rocker shaft 23 is provided at the front end of the damper stay 73. The lower damper supporting shaft 74 is formed in the shape of a bolt and its end is fastened and fixed to the front end of the damper stay 73.

The lower fulcrum 71 of the roll damper 31 is joumaled to the lower damper supporting shaft 74 via a bearing fitted to the inner circumference.

The right upper arm 56 is provided with an extended part 75 extended downward from the first upper rocking central part 58 and an upper damper supporting shaft 76 that supports the upper fulcrum 72 of the roll damper 31 is attached to the extended part 75.

Detailedly, the upper damper supporting shaft 76 is formed in the shape of a bolt and its end is fastened and fixed to a support stay 77 attached to a bottom of the extended part 75. The support stay 77 is fixed to the bottom of the extended part 75 by a stay fixing bolt 78 inserted into the support stay 77 from the downside. The upper damper supporting shaft 76 is swung integrally with the right upper arm 56.

The upper damper supporting shaft 76 is extended forward in parallel with the lower damper supporting shaft 74 and a front end of the upper damper supporting shaft 76 is located in front of a front end of the right upper arm 56.

The upper fulcrum 72 of the roll damper 31 is joumaled to the upper damper supporting shaft 76 via a bearing fitted to the inner circumference.

The roll damper 31 is arranged in front of the lower arm 30, and the upper fulcrum 72 and the lower fulcrum 71 are provided with them vertically having the lower arm 30 between them.

The roll damper 31 is arranged so that an axis of the roll damper 31 is overlapped with the axis C of the head pipe 13 in a front view and the axis is substantially perpendicular to the axis 22a and the first lower rocker shaft 23a in a side view.

When the right upper arm 56 is swung, the roll damper 31 is laterally swung with the lower damper supporting shaft 74 in the center and as the cylinder part 68 is reciprocated via the upper damper supporting shaft 76, the roll damper is axially extended and contracted.

Each tie rod 45L, 45R is provided with an inner end (an upper end of the tie rod) 80 coupled to the tie rod support arm 44, an outer end (a lower end of the tie rod) 81 coupled to the tie rod coupling arm 38 and a body of the rod 82 that connects the inner end 80 and the outer end 81. The body of the rod 82 is linearly extended.

The tie rod support arm 44 is provided with a forward extended part 83 extended forward on the downside of the damper stay 73 from a position at the lower end of the head pipe 13 and an upward extended part 84 which rises upward from a front end of the forward extended part 83 and which is extended in front of a lower end of the roll damper 31.

A pair of right and left inner end coupling parts 85 to which the inner ends 80 of the tie rods 45L, 45R are coupled are provided at an upper end of the upward extended part 84. The inner end coupling parts 85 are arranged symmetrically in a lateral direction on the basis of the axis C of the head pipe 13 and are located outside the lower rocking central part 50. The inner end coupling parts 85 are a shaft protruded upward from the upward extended part 84 and are arranged in a state in which they are inclined so that the side of each upper end is located outside in the vehicle width direction in a front view. Besides, the inner end coupling parts 85 are arranged in a state in which they are inclined so that the side of each upper end is located at the back in a side view.

The inner ends 80 of the tie rods 45L, 45R are turnably coupled to the inner end coupling parts 85 via each ball joint and others.

Front ends of the tie rod coupling arms 38 provided to the bottom bridges 36 are located on the downside and in front of a front end of the upward extended part 84 of the tie rod support arm 44. The outer end coupling parts 86 to which the outer ends 81 of the tie rods 45L, 45R are coupled are provided at the front ends of the tie rod coupling arms 38. The outer end coupling parts 86 are a shaft protruded upward from the front ends of the tie rod coupling arms 38 and are arranged in substantially parallel with the inner end coupling parts 85 in a front view and in a side view. The outer ends 81 of the tie rods 45L, 45R are turnably coupled to the outer end coupling parts 86 via each ball joint and others.

The outer end coupling parts 86 are located outside the inner end coupling parts 85 in the vehicle width direction and are located in front of and on the downsides of the inner end coupling parts 85. Besides, the outer end coupling parts 86 are located on the downsides of and outside the lower coupling shafts 48 of the lower arm 30 in the vehicle width direction in a front view.

Accordingly, each tie rod 45L, 45R that linearly connects the inner end coupling part 85 and the outer end coupling part 86 is arranged with the tie rod diagonally inclined outward and downward in the vehicle width direction in a front view. Detailedly, each tie rod 45L, 45R is located in the lowest position in its outermost part in the vehicle width direction in the front view and is located in a lower position on the front side in a side view.

As shown in Figs. 4 to 8, the rocking vehicle 10 is provided with a rocking lock mechanism 90 that locks a rocking of the rocker mechanism 64.

The rocking lock mechanism 90 is provided with a disc plate 91 fixed to the lower arm 30, a caliper (a rocking lock actuating part) 92 which is fixed to the main frame 14 and which can lock the movement of the disc plate 91, a rocking lock operating lever (a rocking lock operating part) 130 to which operation for locking a rocking by a user is input and a rocking lock operation cable (a relay member) 131 that connects the side of the rocking lock operating lever 130 and the caliper 92.

The rocking lock mechanism 90 is a mechanism for locking the rocker mechanism 64 of the rocking vehicle 10 in an upright state and prevents the rocking of the rocker mechanism 64 when the rocking vehicle 10 is parked and the user walks, pushing the rocking vehicle 10. The disc plate 91 and the caliper 92 are arranged in the space K at the back of the head pipe in the side view shown in Fig. 5 and are arranged in the center in the vehicle width direction in a front view.

The disc plate 91 is fixed to the rear-side lower arm 54 of the lower arm 30. The rear-side lower arm 54 is arranged in a lower part of the front of the space K at the back of the head pipe in the side view shown in Fig. 5 and is provided along a rear face of the head pipe 13. The lower rocking central part 50 of the rear-side lower arm 54 is provided with a cylindrical protruded part 50b (see Fig. 8) protruded backward from the rear faces of the rear-side arm parts 54b.

The disc plate 91 is a plate formed substantially in the shape of a fan. Detailedly, the disc plate 91 is formed substantially in the shape of the fan the central angle of which is substantially 90 degrees. The disc plate 91 is arranged in an upright state so that a fan-shaped periphery 91a is an upper end and is arranged so that its center line in the vehicle width direction is substantially matched with the axis C of the head pipe 13.

The disc plate 91 is provided with a cut-out portion 91c cut out in the shape of a circular arc along a periphery of an upper part of the protruded part 50b of the rear-side lower arm 54 at its lower end.

As shown in Fig. 8, a front face of a lower part of the disc plate 91 abuts a rear face of the rear-side lower arm 54 and the disc plate is arranged in a state in which a lower edge of the cut-out portion 91c is put on the periphery of the protruded part 50b of the rear-side lower arm 54 from the upside. Next, the disc plate 91 is fastened and fixed to an upper part of the center in the lateral direction of the rear-side lower arm 54 by plural disc fixing bolts 93 inserted into the lower part of the disc plate 91 from the rear side. The disc plate 91 is extended upward along the rear face of the rear-side lower arm 54 and the periphery 91a at an upper end is located in an upper part of the space K at the back of the head pipe. The disc plate 91 is opposite to the rear face of the head pipe 13.

The caliper 92 is arranged in the upper part of the space K at the back of the head pipe in the side view shown in Fig. 5. The caliper 92 is provided with a blocky body 94 of the caliper having a groove open downward in a side view, a pair of plate like pads 95 supported in the groove of the body 94 of the caliper and an operating arm 96 for operating the pads 95 by being turned.

The caliper 92 is fixed to the forked frames 19 via plate like caliper stays 97 and is located in the center in the vehicle width direction. The forked frames 19 are provided with stays 19b (see Fig. 5) protruded forward on front faces of upper parts, the caliper stay 97 is fixed to the stay 19b by each bolt 98, and the caliper stay is extended downward in the space K at the back of the head pipe.

The body 94 of the caliper is fastened ad fixed to the caliper stays 97 by caliper fixing bolts 99 (see Fig. 8) inserted into right and left ends of the body 94 of the caliper. A turning shaft 96a of the operating arm 96 is located in the center in the vehicle width direction between the caliper fixing bolts 99.

An upper part of the disc plate 91 is arranged in the groove of the caliper 92 and is held between the pair of pads 95. The operating arm 96 of the caliper 92 is connected to the rocking lock operating lever 130 via the rocking lock operation cable 131, when the operating arm 96 is operated via the rocking lock operating lever 130 by the user, one of the pads 95 is pressed, the disc plate 91 is held between the pair of pads 95, and a rocking around the lower rocker shaft 23 of the disc plate 91 is disenabled. Hereby, as a rocking of the disc plate 91 is locked and a rocking of the rear-side lower arm 54 to which the disc plate 91 is integrally fixed is locked, the whole rocking of the rocker mechanism 64 is locked.

In this embodiment, as the disc plate 91 and the caliper 92 are arranged in the space K at the back of the head pipe encircled by the head pipe 13, the upper main frame 15 and the lower main frame 16, the rocking lock mechanism 90 can be compactly arranged.

Besides, as the lower arm 30 is provided in a state in which the lower arm is divided in front of and at the back of the head pipe 13 and the disc plate 91 is fixed to the rear-side lower arm 54 in the space K at the back of the head pipe, the rocking lock mechanism 90 can be compactly arranged utilizing the space K at the back of the head pipe. Moreover, as the lower arm 30 is widely provided in a longitudinal direction, the rigidity of the lower arm 30 is enhanced.

Further, as the rear-side lower arm 54 is provided at the back of the head pipe 13, an overhang in front of the head pipe 13 of the whole lower arm 30 can be reduced. Therefore, the roll damper 31 can be compactly arranged in space formed in front of the front-side lower arm 53.

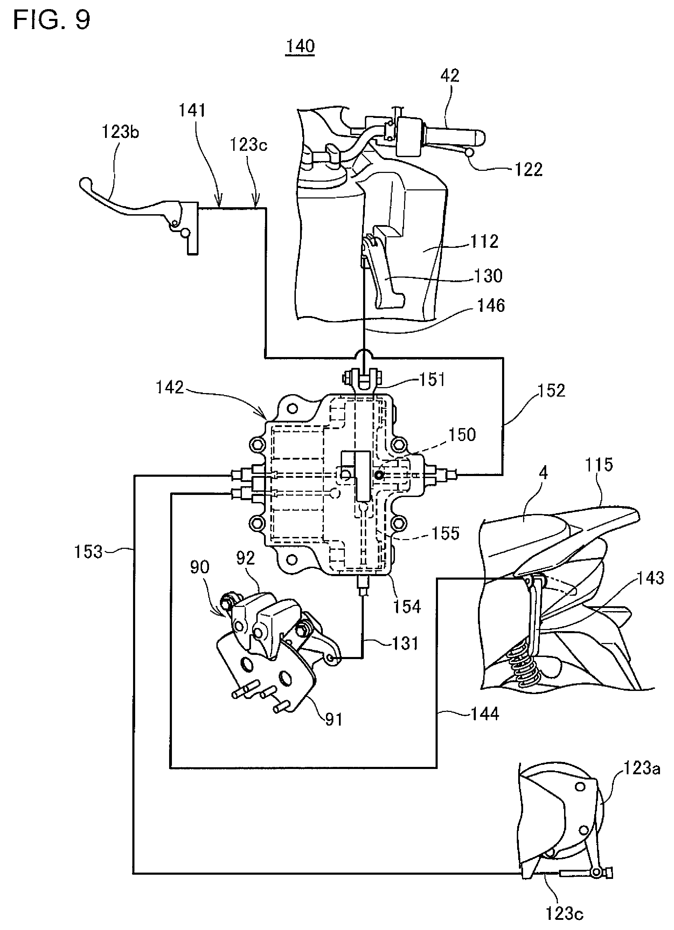

Fig. 9 is a schematic diagram showing the configuration of a lock mechanism 140 of the rocking vehicle 10.

As shown in Fig. 9, the rocking vehicle 10 is provided with the lock mechanism 140 that regulates a longitudinal motion of the rocking vehicle 10 and a rocking of the rocking vehicle 10.

The lock mechanism 140 is provided with a rear brake mechanism (a brake mechanism) 141 that locks the rotation of the rear wheel 3, the rocking lock mechanism 90 and the inhibitor (the interlock mechanism) 142 that regulates the operation/nonoperation of the rear brake mechanism 141 and the rocking lock mechanism 90 according to mutual operated states of the rear brake mechanism 141 and the rocking lock mechanism 90.

The inhibitor 142 is built in the rear brake mechanism 141 and the rocking lock mechanism 90 and configures a part of the rear brake mechanism 141 and the rocking lock mechanism 90.

Detailedly, the rear brake mechanism 141 is configured by the brake lever 123b, the brake operation cable 123c, the drum 123a, the inhibitor 142, a brake release lever (a brake release operating part) 143 to which operation for releasing a locked state of the rear wheel 3 is input and a release operation cable 144 that connects the brake release lever 143 and the inhibitor 142. The rear brake mechanism 141 locks the rear wheel braking device 123 in an actuated state by the inhibitor 142 in parking.

Besides, the rocking lock mechanism 90 is configured by the rocking lock operating lever 130, the rocking lock operation cable 131, the inhibitor 142 and the caliper 92.

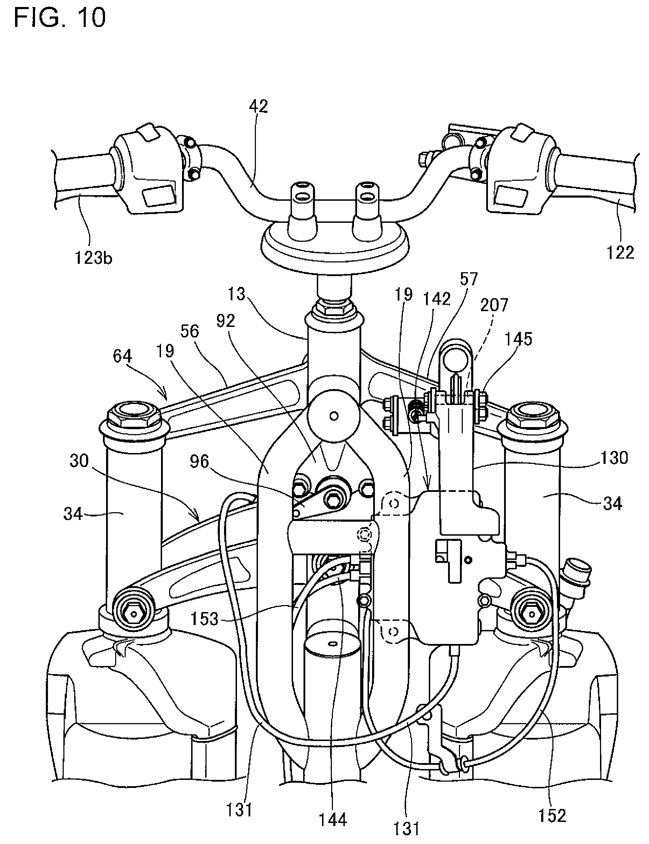

Fig. 10 is a rear view showing a circumference of an upper part of the main frame 14 viewed from the rear side. In Fig. 10, a suspension lock operating lever 201 described later is not shown.

As shown in Figs. 2 and 10, the inhibitor 142 is formed in the shape of a substantially rectangular case and is provided in the space K at the back of the head pipe in a side view.

Detailedly, the inhibitor 142 is arranged in a state in which it vertically stands so that a direction of the thickness is equivalent to the longitudinal direction of the vehicle and a left end of its rear face is fixed to a front face of the right forked frame 19. Besides, the inhibitor 142 is provided on the downside of the caliper 92 and is located between the head pipe 13 and the right front wheel supporting member 33R in a side view. As described above, as the inhibitor 142 is provided in the space K at the back of the head pipe, the inhibitor 142 can be compactly arranged in a position close to the brake lever 123b and the rocking lock operating lever 130.

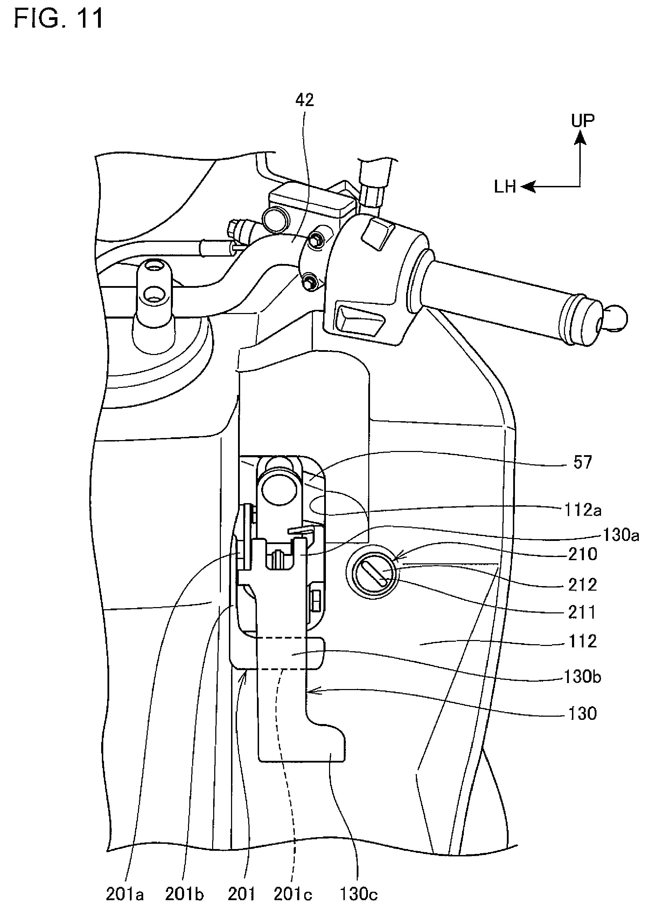

Fig. 11 is a rear view showing a circumference of the rocking lock operating lever 130 viewed from the rear side.

As shown in Figs. 2, 10 and 11, the rocking lock operating lever 130 is provided on the upside of the the inhibitor 142 and is arranged so that the rocking lock operating lever is overlapped with the inhibitor 142 in the longitudinal direction. The rocking lock operating lever 130 is attached to a lever stay 145 extended from the body frame 11. The lever stay 145 is provided with a lever supporting part 207 extended in the vehicle width direction and is turnably supported by the lever supporting part 207.

The rocking lock operating lever 130 is coupled to an upper part of the inhibitor 142 by a link (a relay member, see Fig. 4) 146 extended downward. As the rocking lock operating lever 130 is vertically turned with the lever supporting part 207 in the center, the operation of the rocking lock operating lever 130 is input to the inhibitor 142.

The rocking lock operating lever 130 is provided in a state in which it is exposed backward from a cover opening 112a (see Fig. 11) provided to the leg shield 112 on the downside of a right end of the handlebar 42.

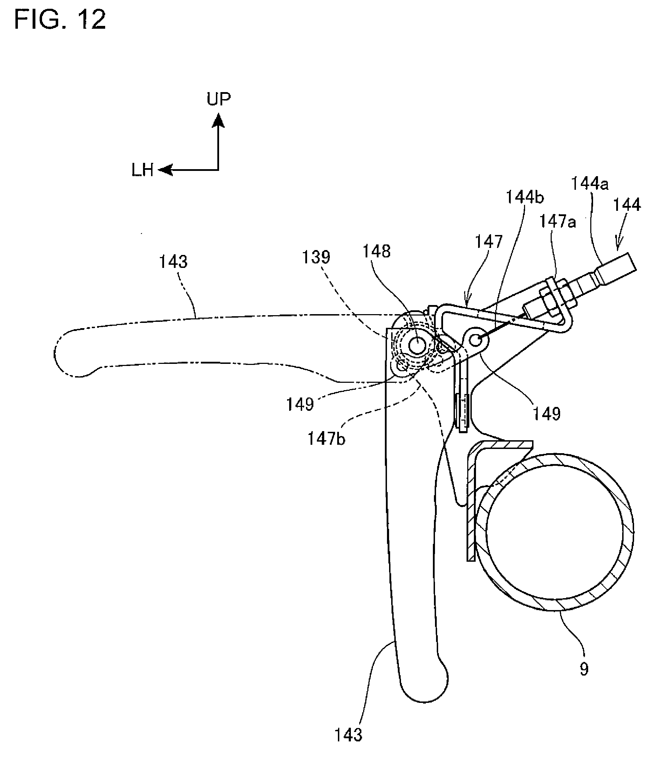

Fig. 12 is a sectional view viewed along a line XII-XII shown in Fig. 1.

A rear lever stay 147 extended upward from an outer side is provided to the rear of the rear frame 9. The rear lever stay 147 is provided with a cable supporting part 147a that supports an end of a release operation cable 144 and a lever supporting part 147b that supports a lever supporting shaft 148 extended in the longitudinal direction of the vehicle. The brake release lever 143 is joumaled to the lever supporting shaft 148.

The brake release lever 143 is connected to the release operation cable 144 via a link member 149.

As for the release operation cable 144, an outer cable 144a is supported by the cable supporting part 147a and an end of an inner cable 144b is connected to one end of the link member 149. Abase of the brake release lever 143 is joumaled to the lever supporting shaft 148. The other end of the link member 149 is coupled to a part in the vicinity of the lever supporting shaft 148 in the brake release lever 143.

The brake release lever 143 is pressed by a spring 139 inserted between the brake release lever 143 and the lever supporting part 147b so that a body of the lever is vertically directed along the rear cover 114. When the user turns the brake release lever 143 outside in the vehicle width direction as shown by a virtual line, the inner cable 144b is pulled outside in the vehicle width direction via the link member 149 and the operation of the brake release lever 143 is input to the inhibitor 142. That is, in a state in which the user operates the brake release lever 143 in a brake release position shown by the virtual line, the body of the brake release lever 143 is directed in the vehicle width direction. In this case, the brake release position denotes an operating position of the brake release lever 143 in which a lock of the rear wheel 3 is released.

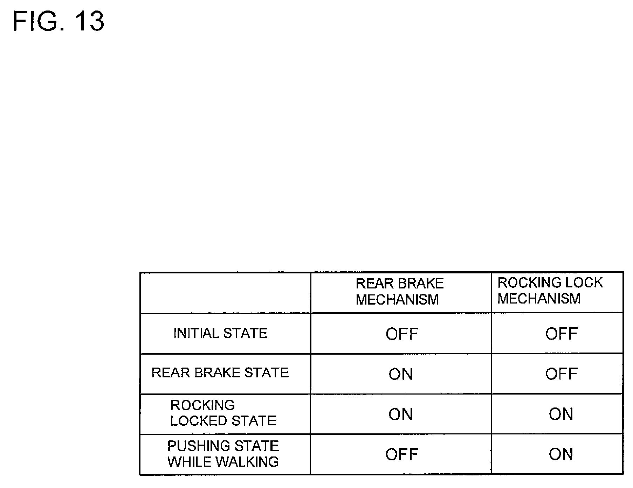

Fig. 13 is a table showing operating states of the rear brake mechanism 141 and the rocking lock mechanism 90 out of each operating state of the lock mechanism 140. In the following description, states (locked states) in which the rear brake mechanism 141 and the rocking lock mechanism 90 are respectively operated are described as an ON state and states (lock released states) in which the rear brake mechanism 141 and the rocking lock mechanism 90 are respectively not operated are described as an OFF state.

The lock mechanism 140 secures four states of "an initial state" in which both the rear brake mechanism 141 and the rocking lock mechanism 90 are turned off and are not operated, "a rear brake state" in which the rear brake mechanism 141 is turned on and the rocking lock mechanism 90 is turned off, "a rocking locked state" in which both the rear brake mechanism 141 and the rocking lock mechanism 90 are turned on and "a pushing state while walking" in which the rear brake mechanism 141 is turned off and the rocking lock mechanism 90 is turned on. Switching these four states is controlled by the inhibitor 142.

In "the initial state" of the lock mechanism 140, the rear wheel 3 can be rotated and the rocker mechanism 64 can rock.

In "the rear brake state", the rear wheel 3 cannot be rotated and the rocker mechanism 64 can rock.

In "the rocking locked state", the rear wheel 3 cannot be rotated and the rocker mechanism 64 cannot rock. In the rocking locked state, as the movement in the longitudinal direction and the rocking of the rocking vehicle 10 are made impossible, the lock mechanism 140 is normally kept the rocking locked state when the rocking vehicle 10 is parked.

In "the pushing state while walking", the rear wheel 3 can be rotated and the rocker mechanism 64 cannot rock. In the pushing state while walking, as the rocking of the rocking vehicle 10 is regulated, it is easy for the user to walk, pushing the rocking vehicle 10.

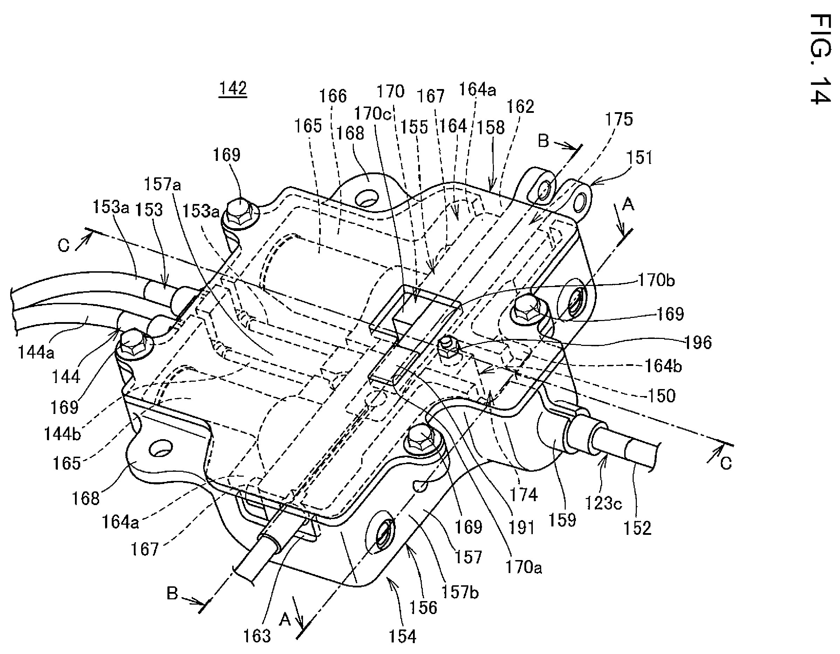

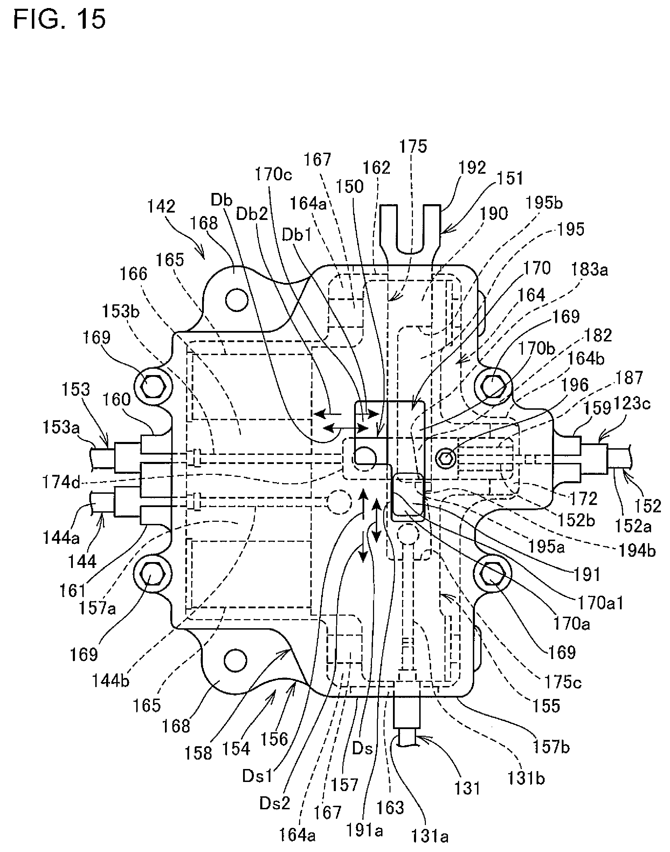

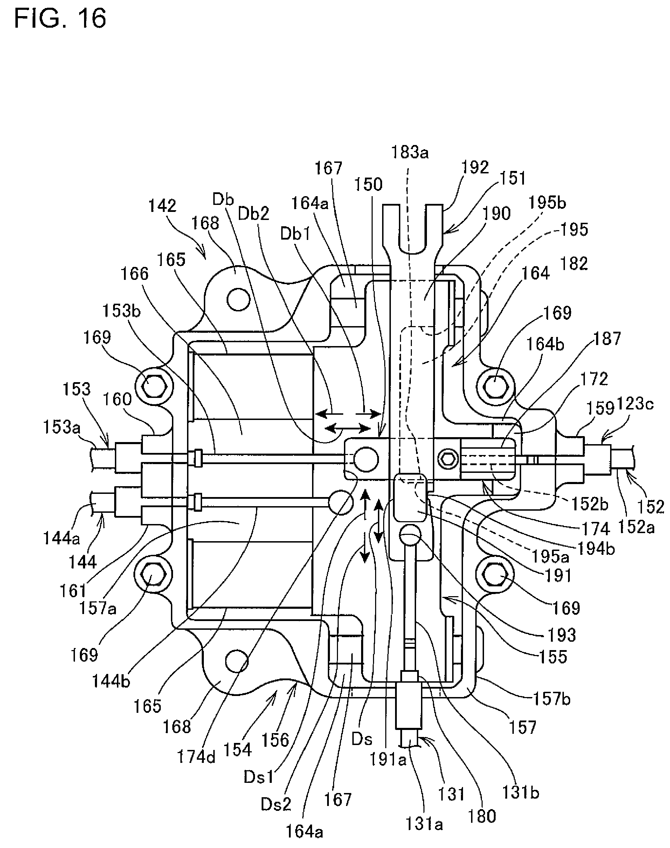

Fig. 14 is a perspective view showing the inhibitor 142. Fig. 15 is a plan view showing the inhibitor 142. Fig. 16 is a plan view showing a state in which a cover 158 described later is removed. In Figs. 14 to 16, a state of the inhibitor 142 corresponding to the initial state of the lock mechanism 140 is shown.

As shown in Figs. 9 and 14 to 16, the inhibitor 142 is provided with a rear brake interlocking member (a brake interlocking member) 150 that connects the brake lever 123b and the drum 123a via the brake operation cable 123c and a rocking lock interlocking member 151 that connects the rocking lock operating lever 130 and the caliper 92 via the link 146 and the rocking lock operation cable 131. In this case, the brake operation cable 123c is provided with an operating-side cable (the relay member) 152 that connects the brake lever 123b and the rear brake interlocking member 150 and an actuating-side cable (the relay member) 153 that connects the rear brake interlocking member 150 and the drum 123a.

Besides, the inhibitor 142 is provided with a case 154 that houses components such as the rear brake interlocking member 150 and the rocking lock interlocking member 151 of the inhibitor 142. The case 154 is provided with a housing 155 that guides the movement of the rear brake interlocking member 150 and the movement of the rocking lock interlocking member 151 and houses these and a body 156 of the case that houses the housing 155. Further, the body 156 of the case is provided with a box-type case part 157 one face of which is open and the plate like cover 158 that closes an opening of the case part 157.

The rear brake interlocking member 150 is a member that connects the operating-side cable 152 and the actuating-side cable 153 in the inhibitor 142 and is moved in interlock with the movement of the brake operation cable 123c.

The rocking lock interlocking member 151 is a member that connects the link 146 (see Fig. 4) and the rocking lock operation cable 131 in the inhibitor 142 and is moved in interlock with the movement of the rocking lock operation cable 131.

The inhibitor 142 is configured so that a direction of the movement of the brake operation cable 123c according to the operation and a direction of the movement of the rocking lock operation cable 131 are perpendicular. Therefore, the moving direction Db of the rear brake interlocking member 150 and the moving direction Ds of the rocking lock interlocking member 151 are perpendicular. In this embodiment, the moving direction Db is equivalent to a vertical direction and the moving direction Ds is equivalent to a lateral direction (the vehicle width direction).

The case part 157 of the body 156 of the case is provided with a bottom wall 157a opposite to the cover 158 and a frame-type side wall 157b stood on the side of the cover 158 from a margin of the bottom wall 157a, and its top surface is closed by the cover 158.

An operating-side cable supporting part 159 through which the operating-side cable 152 is passed and an actuating-side cable supporting part 160 through which the actuating-side cable 153 is passed are provided to the side wall 157b of the case part 157. The operating-side cable supporting part 159 and the actuating-side cable supporting part 160 are provided to the wall on one side and the wall on the other side in the moving direction Db of the side wall 157b, and are arranged on a straight line along the moving direction Db.

Besides, a release-side cable supporting part 161 through which the release operation cable 144 is passed is provided to the wall on the other side next to the actuating-side cable supporting part 160.

In other words, the operating-side cable supporting part 159 is provided to the outer side in the vehicle width direction of the side wall 157b, and the actuating-side cable supporting part 160 and the release-side cable supporting part 161 are provided to the inner side in the vehicle width direction of the side wall 157b.

As for the operating-side cable 152, its outer cable 152a is fixed to the operating-side cable supporting part 159 and its inner cable 152b is connected to the rear brake interlocking member 150.

As for the actuating-side cable 153, its outer cable 153a is fixed to the actuating-side cable supporting part 160 and its inner cable 153b is connected to the rear brake interlocking member 150.

As for the release operation cable 144, its outer cable 144a is fixed to the release-side cable supporting part 161 and its inner cable 144b is connected to the housing 155.

An interlocking member insertion hole 162 through which the rocking lock interlocking member 151 is passed is provided to the wall on one side in the moving direction Ds of the side wall 157b of the case part 157, and a rocking lock operation cable insertion hole 163 through which the rocking lock operation cable 131 is passed is provided to the wall on the other side in the moving direction Ds of the side wall 157b.

In other words, the interlocking member insertion hole 162 is provided to a top face of the side wall 157b and the rocking lock operation cable insertion hole 163 is provided to a bottom of the side wall 157b.

As for the rocking lock operation cable 131, its outer cable 131a is fixed to the housing 155 and its inner cable 131b is connected to the rocking lock interlocking member 151.

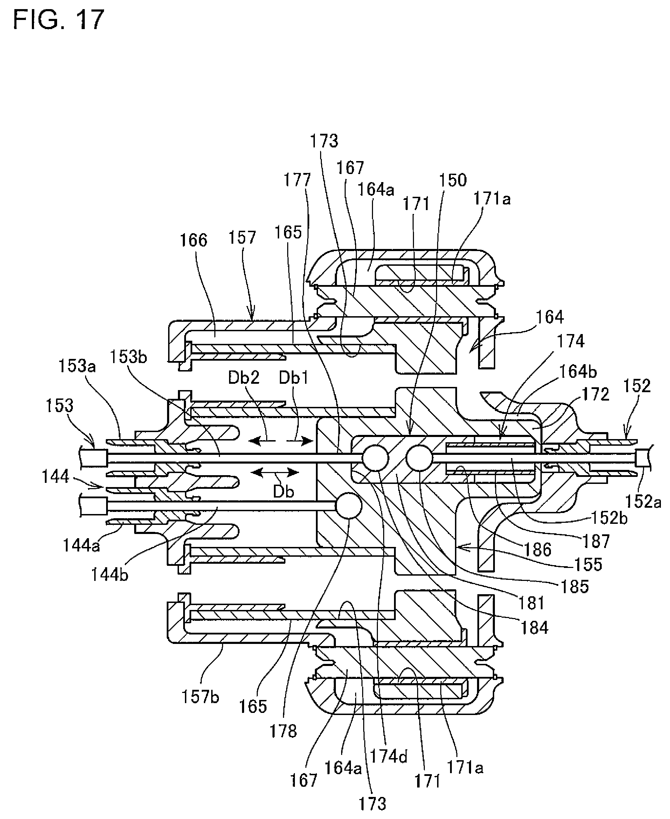

Fig. 17 is a sectional view viewed along a line A-A shown in Fig. 14.

As shown in Figs. 14 to 17, in the case part 157, a housing accommodating chamber 164 that accommodates the housing 155 and a pressing member housing 166 that houses housing pressing springs 165 for pressing the housing 155 are formed continuously in the moving direction Db.

The housing accommodating chamber 164 is vertically provided with overhangs 164a overhung in the vertical direction (in the moving direction Ds) from the pressing member housing 166. A pin 167 extended in the moving direction Db is fixed to the overhang 164a.

Besides, the housing accommodating chamber 164 is provided with an overhang 164b where a part through which the operating-side cable 152 is passed is overhung outside in the moving direction Db in the middle in the vertical direction.

The case part 157 is provided with fixtures 168 into which each bolt (not shown) for fixing the inhibitor 142 to the forked frame 19 (see Fig. 10) is inserted on the upside of and on the downside of the pressing member housing 166.

The cover 158 is fixed to the case part 157 by plural bolts 169 inserted into its margin. The cover 158 is provided with an opening 170 in a part that covers the housing accommodating chamber 164.

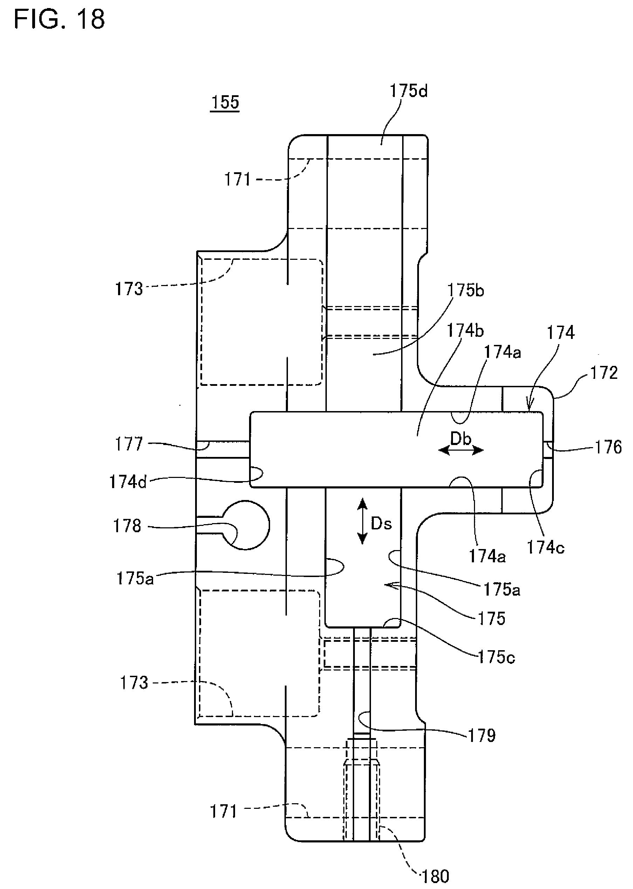

Fig. 18 is a plan view showing the housing 155.

As shown in Figs. 15 to 18, the housing 155 is formed in the shape of a block of a size smaller than the housing accommodating chamber 164.

The housing 155 is provided with sliding holes 171 into which each pin 167 is inserted at both ends in the moving direction Ds. Besides, the housing 155 is provided with an abutting part 172 which is protruded in the overhang 164b and which abuts on an inner wall of the case part 157.

The housing 155 is slidably supported by the pins 167 and can be moved along the pins 167 in the moving direction Db in the case part 157. Detailedly, a sleeve 171a is inserted between the pin 167 and the sliding hole 171.

The housing 155 is provided with spring housings 173 in which one end of each housing pressing spring 165 is housed on the side of the pressing member housing 166. The spring housing 173 is a hole extended in the moving direction Db. The other end of the housing pressing spring 165 is supported by a wall on the side of the actuating-side cable 153 of the case part 157 and the housing 155 is pressed by the housing pressing springs 165 so that the abutting part 172 abuts on the inner wall of the overhang 164b.

The housing 155 is provided with a rear brake interlocking member housing (a guide part) 174 that houses the rear brake interlocking member 150 and a rocking lock interlocking member housing (a guide part) 175 that houses the rocking lock interlocking member 151.

The rear brake interlocking member housing 174 is a rectangular hole extended in the moving direction Db in a plan view. The rear brake interlocking member housing 174 is formed in the shape of a rectangle longer than the rear brake interlocking member 150. The rear brake interlocking member housing 174 is provided to the middle in the moving direction Ds of the housing 155 and is located between the spring housings 173.

The rear brake interlocking member housing 174 is also a guide part for guiding the movement in the moving direction Db of the rear brake interlocking member 150 and is provided with side walls 174a for guiding both sides of the rear brake interlocking member 150, a bottom wall 174b for guiding a bottom of the rear brake interlocking member 150 and walls 174c, 174d that face both end faces in the moving direction Db of the rear brake interlocking member 150.

A through hole 176 through which the inner cable 152b of the operating-side cable 152 is passed is provided to the wall 174c and a through hole 177 through which the inner cable 153b of the actuating-side cable 153 is passed is provided to the wall 174d.

Besides, the housing 155 is provided with a release operation cable connecting part 178 to which an end of the inner cable 144b of the release operation cable 144 is connected in a position adjacent to the through hole 177.

The rocking lock interlocking member housing 175 is a rectangular hole extended in the moving direction Ds in a plan view and is arranged with it crossing the rear brake interlocking member housing 174. In this embodiment, the rocking lock interlocking member housing 175 is overlapped with the rear brake interlocking member housing 174 from the upside and is arranged with it perpendicular to the rear brake interlocking member housing 174.

The rocking lock interlocking member housing 175 is also a guide part for guiding the movement in the moving direction Ds of the rocking lock interlocking member 151 and is provided with side walls 175a for guiding both sides of the rocking lock interlocking member 151, a bottom wall 175b for guiding a bottom of the rocking lock interlocking member 151, a wall 175c that faces an end face on the side of the rocking lock operation cable 131 of the rear brake interlocking member 150 and an opening 175d open outside on the reverse side of the wall 175c.

The depth of the hole of the rocking lock interlocking member housing 175 is formed to be shallower than the depth of the hole of the rear brake interlocking member housing 174 and the bottom wall 175b is located in a higher position than the bottom wall 174b in a direction of the height of the housing 155.

A through hole 179 provided to the wall 175c is extended in the moving direction Ds, pierces the housing 155 to its outside face, and the inner cable 131b of the rocking lock operation cable 131 is passed in the through hole 179.

A rocking lock operation cable supporting part 180 to which the outer cable 131a of the rocking lock operation cable 131 is fixed is provided to an outer end of the through hole 179.

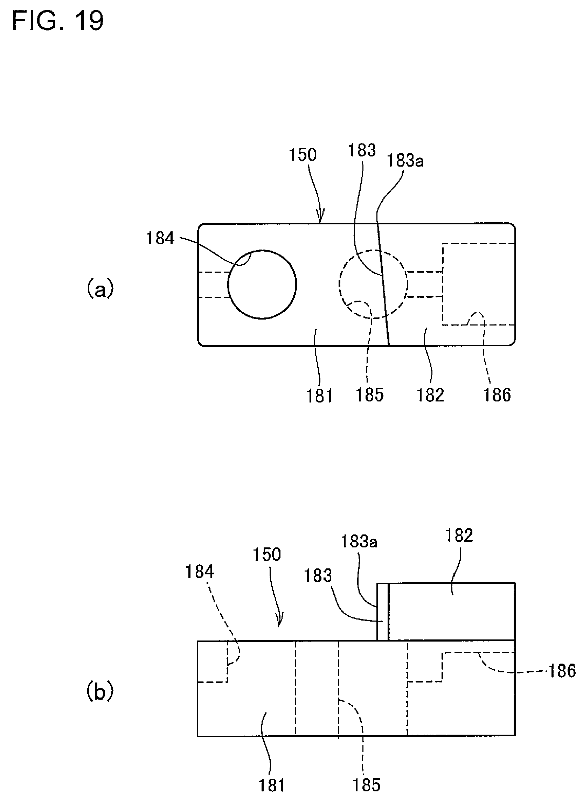

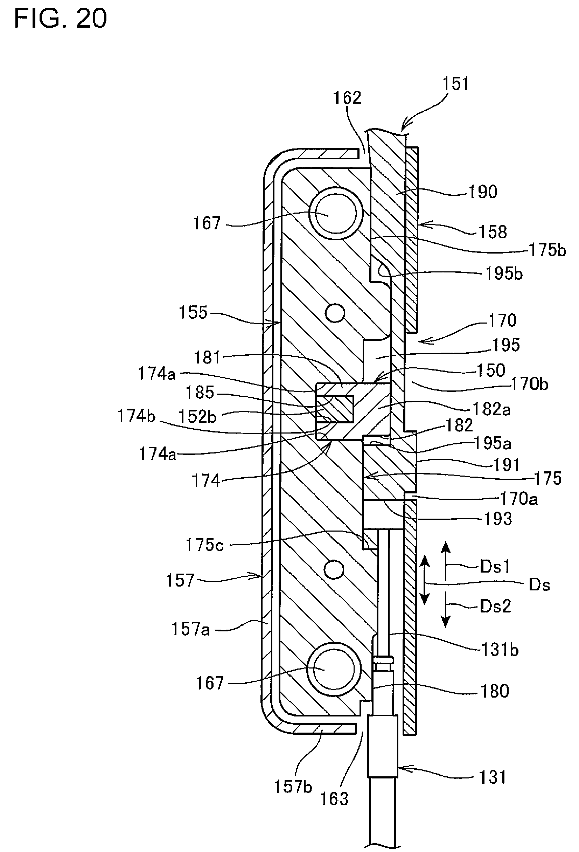

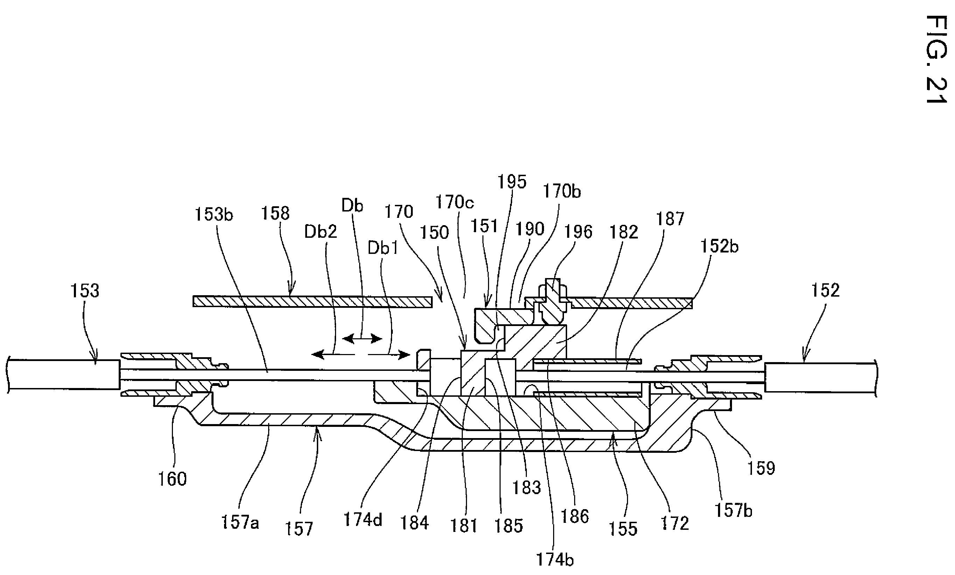

Figs. 19(a) and 19(b) show the rear brake interlocking member 150, Fig. 19(a) is a plan view, and Fig. 19(b) is a side view. Fig. 20 is a sectional view viewed along a line B-B shown in Fig. 14. Fig. 21 is a sectional view viewed along a line C-C shown in Fig. 14.

As shown Figs. 16 to 21, the rear brake interlocking member 150 is formed in the shape of a rectangular block longer in the moving direction Db in a plan view.

The rear brake interlocking member 150 is provided with a base 181 in the shape of a rectangular parallelepiped housed in the rear brake interlocking member housing 174 and a movement regulating part 182 protruded from the base 181 by one step and protruded upward from the rear brake interlocking member housing 174.

The movement regulating part 182 is formed in the shape of a rectangular parallelepiped and is formed at an end on the side of the operating-side cable 152 in a longitudinal direction of the rear brake interlocking member 150.

The movement regulating part 182 is provided with an inclined face 183 acquired by diagonally inclining its end face on the side of the actuating-side cable 153 in the moving direction Db in a plan view. The inclined face 183 is formed so that one end in a direction of the width of the rear brake interlocking member 150 is protruded in the moving direction Db and a locking part 183a by which the rocking lock interlocking member 151 can be locked is formed at an end of the inclined face 183.

An actuating-side cable connecting part 184 to which the inner cable 153b is connected is formed at one end of the base 181 of the rear brake interlocking member 150. Besides, an operating-side cable connecting part 185 to which the inner cable 152b is connected is formed in an intermediate part in a longitudinal direction of the base 181. A spring supporting hole 186 is formed at the other end of the base 181 and one end of an interlocking member pressing spring 187 that presses the rear brake interlocking member 150 is supported in the spring supporting hole 186. The other end of the interlocking member pressing spring 187 is supported by the wall 174c. The inner cable 152b is wired through the spring supporting hole 186 and the inside of the spring 187.

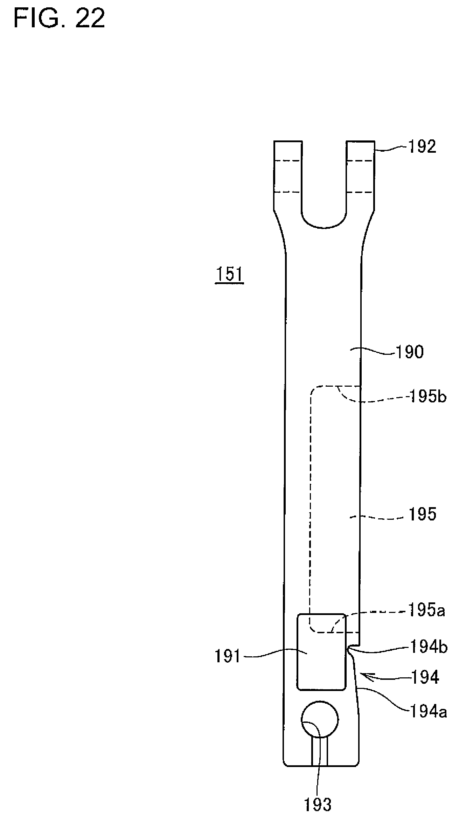

Fig. 22 is a plan view showing the rocking lock interlocking member 151.

As shown in Figs. 16 to 22, the rocking lock interlocking member 151 is a bar the section of which is substantially rectangular. The rocking lock interlocking member 151 is provided with a bar body 190 and a position regulating projection 191 protruded upward by one step from a top face of the body 190.

The body 190 is provided with a lever connecting part 192 connected to the rocking lock operating lever 130 via the link 146 (see Fig. 4) at one end and is provided with a rocking lock operation cable connecting part 193 connected to the rocking lock operation cable 131 at the other end.

The position regulating projection 191 is provided to the other end of the body 190 next to the rocking lock operation cable connecting part 193. The position regulating projection 191 is formed substantially rectangularly in a plan view.

The rocking lock interlocking member 151 is overlapped with the base 181 of the rear brake interlocking member 150 and a part of the movement regulating part 182 from the upside because the body 190 is housed in the rocking lock interlocking member housing 175, and is arranged in a state in which the rocking lock interlocking member is perpendicular to the rear brake interlocking member 150.

A recess 194 in which the side at the other end of the body 190 is recessed inside in a direction of the width is formed at the side at the other end of the body 190 on the side of the movement regulating part 182 of the rear brake interlocking member 150. The recess 194 is provided with an inclined part 194a inclined along the inclined face 183 of the movement regulating part 182 and a locked part 194b which can be locked by the locking part 183a of the inclined face 183.

Besides, the rocking lock interlocking member 151 is provided with a bottom recess 195 in which the side of a bottom of the body 190 is recessed. The movement regulating part 182 of the rear brake interlocking member 150 is housed inside the bottom recess 195. The movement regulating part 182 is housed between one end 195a in a longitudinal direction of the bottom recess 195 and the other end 195b.

As shown in Figs. 9,15 and 16, when the brake lever 123b is operated, the rear brake interlocking member 150 is pulled by the inner cable 152b and is moved in a rear brake actuating direction (a brake actuating direction) Db1. The rear brake actuating direction Db1 is a direction toward the wall 174c from the side of the rear brake interlocking member 150. When the rear brake interlocking member 150 is moved in the rear brake actuating direction Db1, the inner cable 153b is also pulled, the drum 123a of the rear wheel braking device 123 is actuated, and the rear wheel 3 can be locked.

When the rear brake interlocking member 150 is moved in a rear brake releasing direction (a brake releasing direction) Db2 which is a reverse direction to the rear brake actuating direction Db1 in a state in which the rear wheel braking device 123 is actuated, the actuation of the rear wheel braking device 123 is released.

Besides, when the rocking lock operating lever 130 is operated, the rocking lock interlocking member 151 is pulled by the link 146 and is moved in the rocking lock actuating direction Ds1. The rocking lock actuating direction Ds1 is a direction for sliding the rocking lock interlocking member 151 outside along the rocking lock interlocking member housing 175. When the rocking lock interlocking member 151 is moved in the rocking lock actuating direction Ds1, the inner cable 131b is also pulled, the caliper 92 is actuated, and the rocking of the rocker mechanism 64 can be locked.

When the rear brake interlocking member 150 is moved in the rocking lock releasing direction Ds2 which is a reverse direction to the rocking lock actuating direction Ds1 in a state in which the rocker mechanism 64 is operated, the operation of the rocker mechanism 64 is released.

As shown in Figs. 14, 15 and 20, the position regulating projection 191 of the rocking lock interlocking member 151 passes the opening 170 of the cover 158 from the inside of the body 156 of the case.

The opening 170 is provided with a width narrow part 170a having slightly larger width than the width of the position regulating projection 191 and a width widened part 170b widened on the side in the rear brake releasing direction Db2 in a position on the side in the rocking lock actuating direction Ds1 of the width narrow part 170a. That is, the width widened part 170b is provided with an offset opening 170c set in a position on the side in the rocking lock releasing direction Ds2 off the width narrow part 170a in a position on the side in the rocking lock actuating direction Ds1 off the width narrow part 170a.

Besides, a guide member 196 (see Fig. 21) that abuts on a top face of the movement regulating part 182 of the rear brake interlocking member 150 is attached to the cover 158.

Next, a state of the inhibitor 142 in each state of "the initial state", "the rear brake state", "the rocking locked state" and "the pushing state while walking" of the lock mechanism 140 will be described.

In Figs 14 to 17,20 and 21, a state of the inhibitor 142 in "the initial state" is shown.

In the initial state, the housing 155 is pressed by the housing pressing springs 165 and the abutting part 172 is made to abut on the inner wall of the overhang 164b. Besides, in the initial state, the rear brake interlocking member 150 is pressed by the interlocking member pressing spring 187 and an end on the side in the rear brake releasing direction Db2 is made to abut on the wall 174d of the rear brake interlocking member housing 174.

Further, in the initial state, an end on the side in the rocking lock releasing direction Ds2 of the rocking lock interlocking member 151 abuts on the wall 175c of the rocking lock interlocking member housing 175.

In the initial state, the rear brake interlocking member 150 can be moved in the rear brake actuating direction Db1 against the interlocking member pressing spring 187 by operating the brake lever 123b. Besides, when the operation of the brake lever 123b is released, the rear brake interlocking member 150 is returned in the rear brake releasing direction Db2.

In the initial state, a part on the side of the inclined face 183 of the movement regulating part 182 of the rear brake interlocking member 150 gets inside the bottom recess 195 of the rocking lock interlocking member 151 and as shown in Figs. 15 and 20, one end 195a in the moving direction Ds of the bottom recess 195 is located close to a side 182a (see Fig. 20) of the movement regulating part 182. Therefore, in the initial state, even if the operation of the rocking lock operating lever 130 is tried, one end 195a of the bottom recess 195 abuts on the side 182a of the movement regulating part 182 and the rocking lock interlocking member 151 cannot be moved in the rocking lock actuating direction Ds1.

That is, in the initial state, the movement regulating part 182 is located on a course in the rocking lock actuating direction Ds1 of one end 195a of the bottom recess 195 and regulates the movement in the rocking lock actuating direction Ds1 of the rocking lock interlocking member 151. In this embodiment, a state in which the movement regulating part 182 regulates the movement in the rocking lock actuating direction Ds1 of the rocking lock interlocking member 151 as shown in Fig. 20 is called "a first regulated state".

In the initial state, the position regulating projection 191 of the rocking lock interlocking member 151 is located in the width narrow part 170a of the opening 170. Hereby, as a side 191 a of the position regulating projection 191 of the rocking lock interlocking member 151 abuts on a margin 170a1 on the side in the rear brake releasing direction Db2 of the width narrow part 170a even if the operation of the brake release lever 143 is tried in the initial state, the housing 155 cannot be moved in the rear brake releasing direction Db2, and the brake release lever 143 cannot be operated up to a brake release position. In this embodiment, a state in which the width narrow part 170a regulates the movement in the rear brake releasing direction Db2 of the position regulating projection 191 as shown in Fig. 15 is called "a second regulated state".

As described above, as the movement of the rocking lock interlocking member 151 and the movement of the housing 155 can be regulated utilizing the opening 170 of the cover 158 of the case 154, the inhibitor 142 can be configured with a simple configuration.

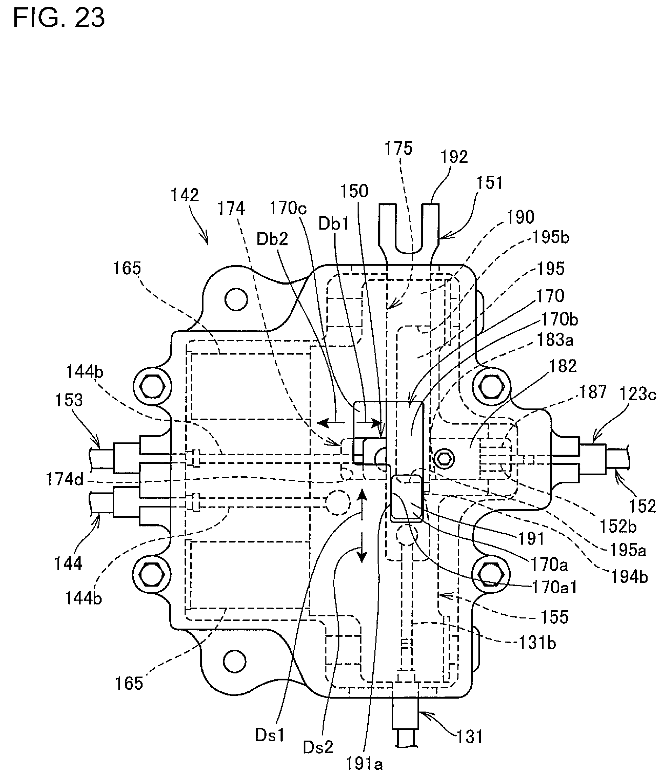

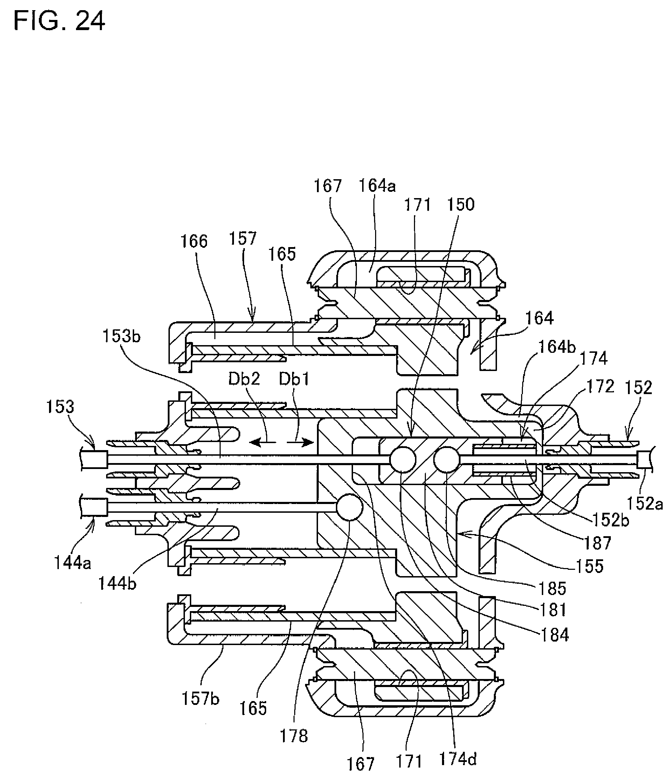

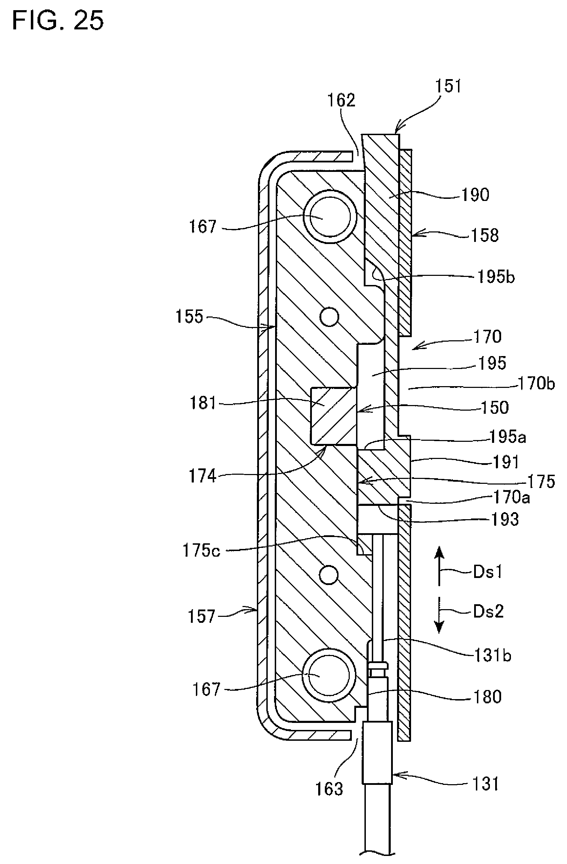

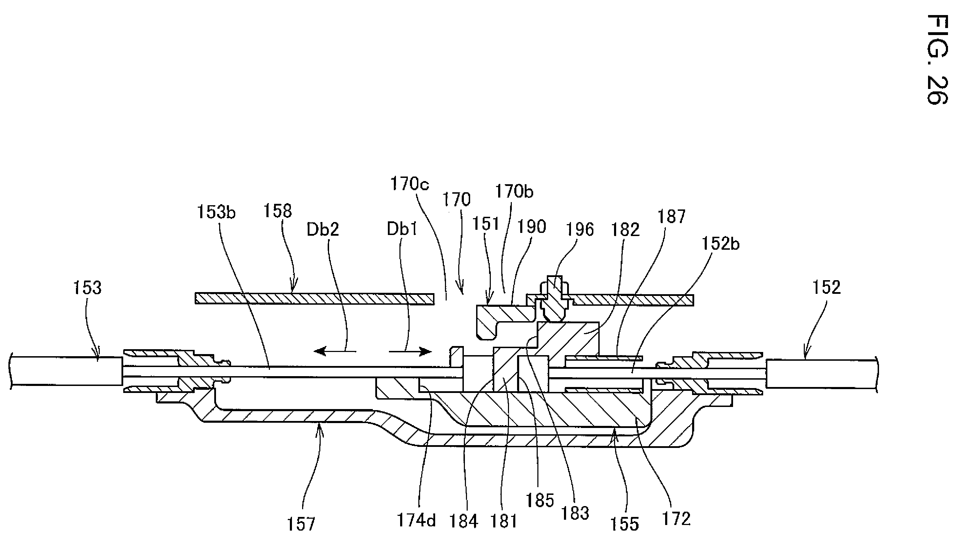

Fig. 23 is a plan view showing the inhibitor 142 in "the rear brake state" of the lock mechanism 140. Fig. 24 is a sectional view viewed along the line A-A shown in Fig. 14 in the rear brake state. Fig. 25 is a sectional view viewed along the line B-B shown in Fig. 14 in the rear brake state. Fig. 26 is a sectional view viewed along the line C-C shown in Fig. 14 in the rear brake state.

As shown in Figs. 23 to 26, in the rear brake state, the brake lever 123b is located in a parking position by the operation of the user and the rear brake interlocking member 150 is moved in the rear brake actuating direction Db1 against the interlocking member pressing spring 187. Therefore, the movement regulating part 182 of the rear brake interlocking member 150 is moved outside the bottom recess 195. The parking position of the brake lever 123b is equivalent to an operation position of the brake release lever 143 in which the rear wheel 3 is locked.

That is, in the rear brake state, the rear brake interlocking member 150 is moved, the movement regulating part 182 is off the course in the rocking lock actuating direction Ds1 of one end 195a of the bottom recess 195, and "the first regulated state" is released.

Therefore, in the rear brake state, the rocking lock operating lever 130 is operated and the rocking lock interlocking member 151 can be moved in the rocking lock actuating direction Ds1.

Besides, in the rear brake state, the position regulating projection 191 is located in the width narrow part 170a and "the second regulated state" is maintained. Therefore, in the rear brake state, the brake release lever 143 cannot be operated up to a brake release position.

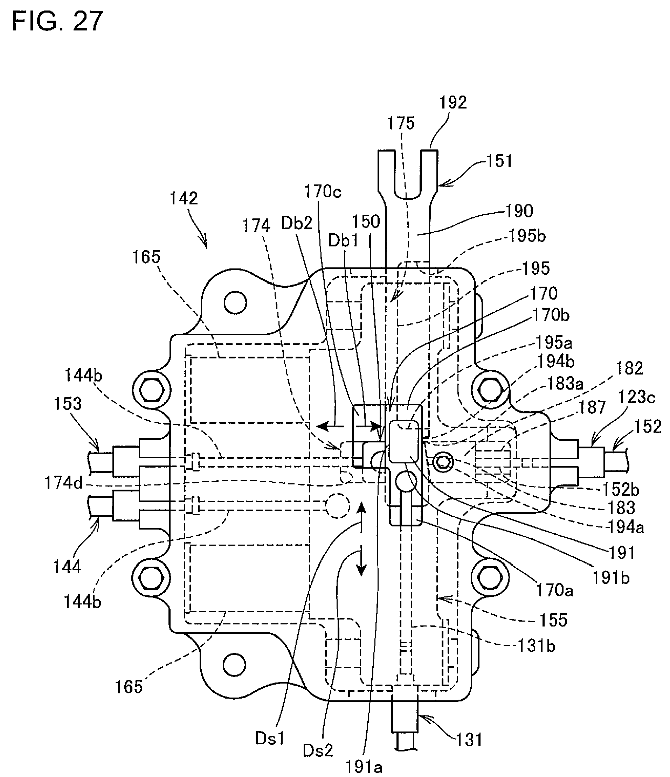

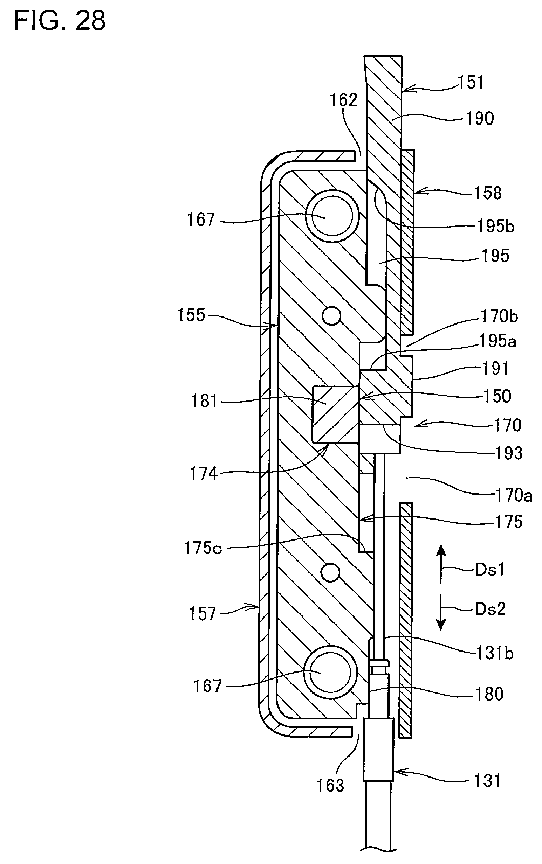

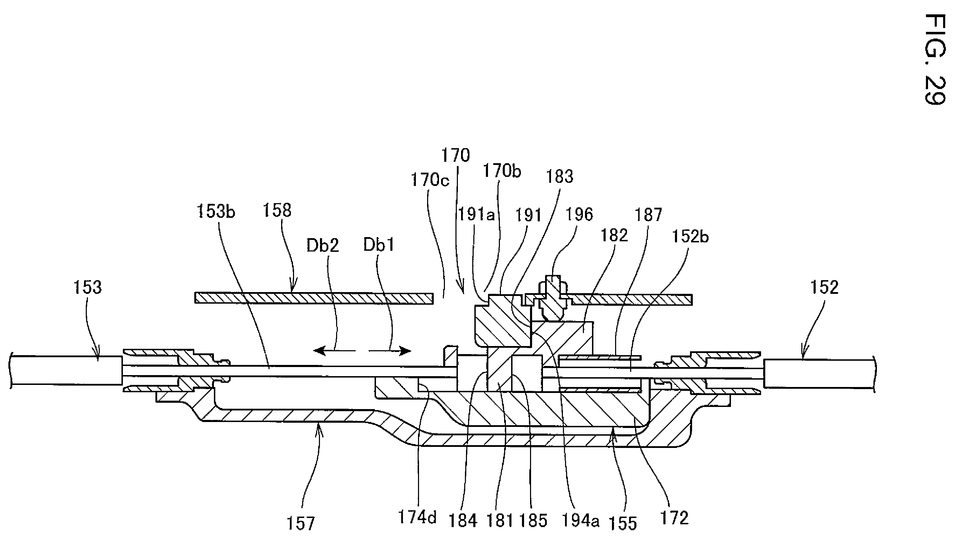

Fig. 27 is a plan view showing the inhibitor 142 in "the rocking locked state" of the lock mechanism 140. Fig. 28 is a sectional view viewed along the line B-B shown in Fig. 14 in the rocking locked state. Fig. 29 is a sectional view viewed along the line C-C shown in Fig. 14 in the rocking locked state. In a change from the rear brake state to the rocking locked state, no change occurs in a sectional view viewed along the line A-A shown in Fig. 14. Therefore, the sectional view viewed along the line A-A in Fig. 14 in the rocking locked state is omitted.

As shown in Figs. 27 to 29, when the rocking lock operating lever 130 is operated and is located in a rocking lock position in "the rear brake state" shown in Fig. 23, the rocking lock interlocking member 151 is moved in the rocking lock actuating direction Ds1 and is turned a rocking locked state. The rocking lock position of the rocking lock operating lever 130 is equivalent to an operating position of the rocking lock operating lever 130 in which the rocking of the rocker mechanism 64 is locked.

In the rocking locked state, the recess 194 is also moved in the rocking lock actuating direction Ds1 according to the movement of the rocking lock interlocking member 151 and the inclined face 183 of the movement regulating part 182 of the rear brake interlocking member 150 abuts on the recess 194. The movement regulating part 182 is pressed on the recess 194 by repulsion of the interlocking member pressing spring 187. Detailedly, as the inclined face 183 of the movement regulating part 182 abuts on the inclined part 194a and the locking part 183a gets into the locked part 194b, the rocking lock interlocking member 151 is locked.

Hereby, as the side of the locking part 183a opposite to the rocking lock releasing direction Ds2 locks the locked part 194b even if the release of the operation of the rocking lock operating lever 130 and the movement in the rocking lock releasing direction Ds2 of the rocking lock interlocking member 151 are tried, a rocking lock position of the rocking lock operating lever 130 cannot be released.

In this embodiment, a state in which the movement in the rocking lock releasing direction Ds2 of the rocking lock interlocking member 151 is regulated by the locking part 183a is called "a third regulated state".

Besides, in "the third regulated state", as the movement regulating part 182 abuts on the recess 194, the movement in the rear brake releasing direction Db2 of the rear brake interlocking member 150 is regulated. Therefore, in the rocking locked state, a locked state of the rear wheel 3 by the rear brake mechanism 141 is maintained.

As the third regulated state occurs in the rocking locked state, the rocking locked state cannot be released by operating only the rocking lock operating lever 130, however, the rocking locked state can be restored to the initial state by operating the brake lever 123b together. That is, in the rocking locked state, the third regulated state can be released by first operating the brake lever 123b and moving the rear brake interlocking member 150 in the rear brake actuating direction Db1 and in this state, the rocking locked state can be restored to the initial state by operating the rocking lock operating lever 130 in a releasing direction.

Besides, in the rocking locked state, the position regulating projection 191 is located in the widened part 170b of the opening 170 according to the movement of the rocking lock interlocking member 151. That is, in the rocking locked state, the second regulated state is released. Hereby, as the position regulating projection 191 can be moved in the rear brake releasing direction Db2 in the widened part 170b, the brake release lever 143 can be operated up to the brake release position.

When only the brake lever 123b is once operated in the rocking locked state, the rocking locked state is maintained.

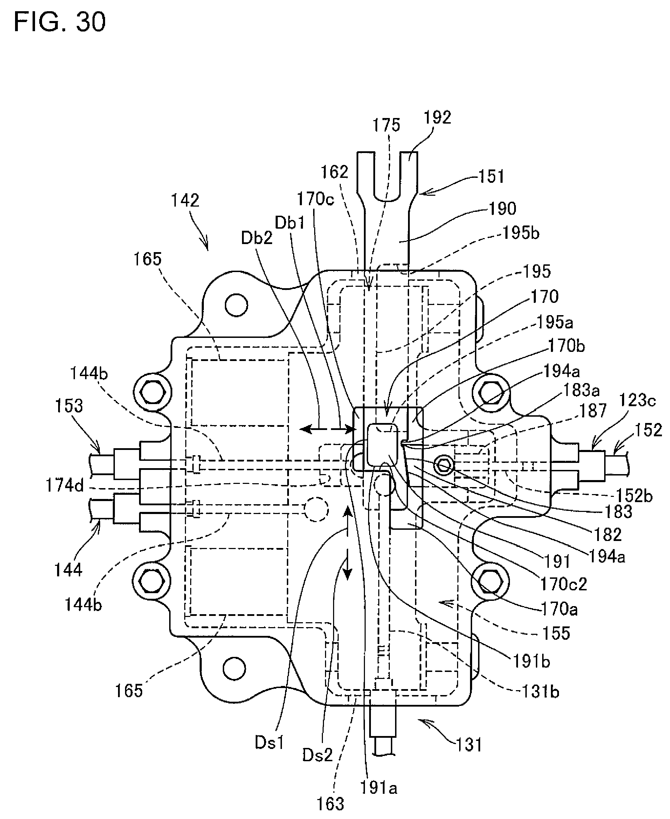

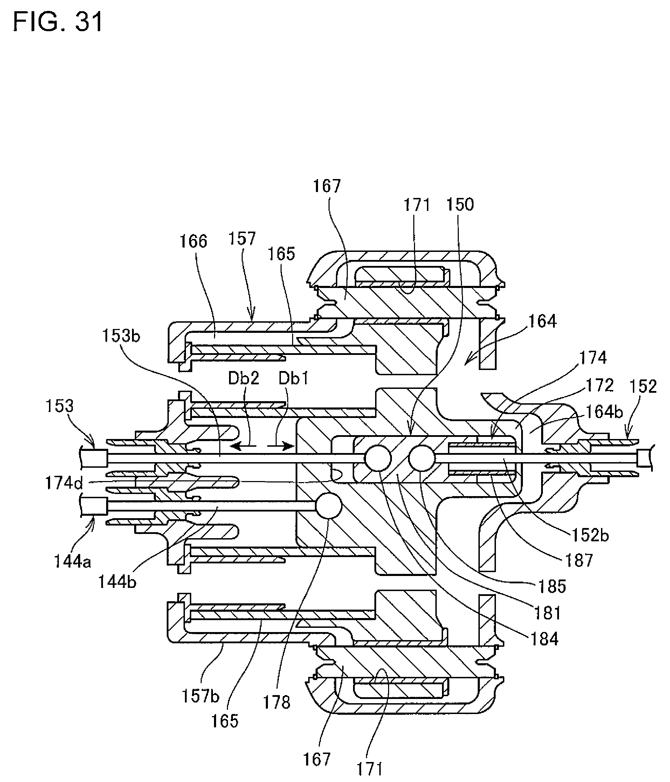

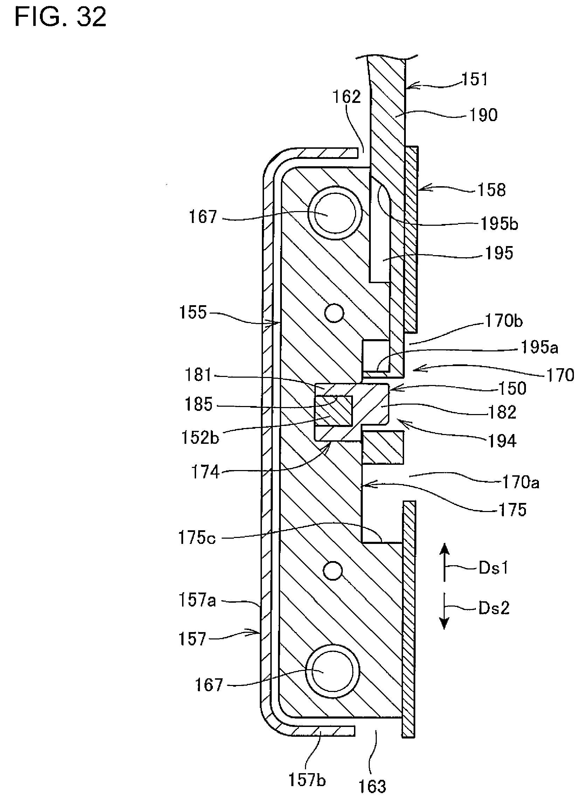

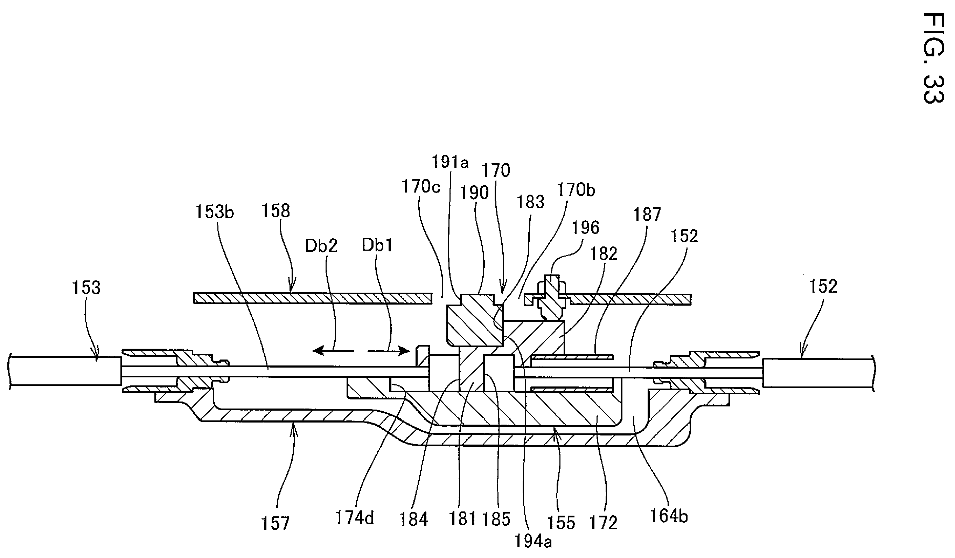

Fig. 30 is a plan view showing the inhibitor 142 in "the pushing state while walking" of the lock mechanism 140. Fig. 31 is a sectional view viewed along the line A-A shown in Fig. 14 in the pushing state while walking. Fig. 32 is a sectional view viewed along the line B-B shown in Fig. 14 in the pushing state while walking. Fig. 33 is a sectional view viewed along the line C-C shown in Fig. 14 in the pushing state while walking.

As shown in Figs. 30 to 33, in the rocking locked state shown in Fig. 27, when the brake release lever 143 is operated and is located in the brake release position, the rocking lock interlocking member 151 and the rear brake interlocking member 150 are moved in the rear brake releasing direction Db2 together with the housing 155 and the rocking locked state is turned the pushing state while walking.

Detailedly, when the inner cable 144b is pulled by the operation of the brake release lever 143, the housing 155 is moved in the rear brake releasing direction Db2 against the housing pressing springs 165. Hereby, the rocking lock interlocking member 151 and the rear brake interlocking member 150 respectively supported by the housing 155 are moved in the rear brake releasing direction Db2 integrally with the housing 155 with the third regulated state maintained. As the rear brake interlocking member 150 is moved in the rear brake releasing direction Db2 even if the third regulated state is maintained, the locked state of the rear wheel 3 by the rear brake mechanism 141 is released. Besides, the rocking lock interlocking member 151 is merely slid in the rear brake releasing direction Db2 and no movement in the moving direction Ds occurs. Therefore, a state of the rocking lock mechanism 90 is unchung and the rocking lock mechanism 90 remains operated.

Moreover, in the pushing state while walking, at least a part of the position regulating projection 191 of the rocking lock interlocking member 151 is located in the offset opening 170c. Therefore, in the pushing state while walking, even if the release of the operation of the rocking lock operating lever 130 and the movement in the rocking lock releasing direction Ds2 of the rocking lock interlocking member 151 are tried, an end 191b on the side in the rocking lock releasing direction Ds2 of the position regulating projection 191 abuts on a margin 170c1 on the side in the rocking lock releasing direction Ds2 of the offset opening 170c. Accordingly, in the pushing state while walking, the rocking lock position of the rocking lock operating lever 130 cannot be released. As described above, a state in which the movement in the rocking lock releasing direction Ds2 of the rocking lock operating lever 130 is regulated by the offset opening 170c is called "a fourth regulated state" in this embodiment.

In addition, in the pushing state while walking, as the third regulated state is maintained, the movement in the rocking lock releasing direction Ds2 of the rocking lock operating lever 130 is regulated.

Further, in the pushing state while walking, "the fourth regulated state" is released by releasing the brake release position of the brake release lever 143 or operating the brake lever 123b in the parking position and the pushing state while walking can be chung to the rocking locked state.

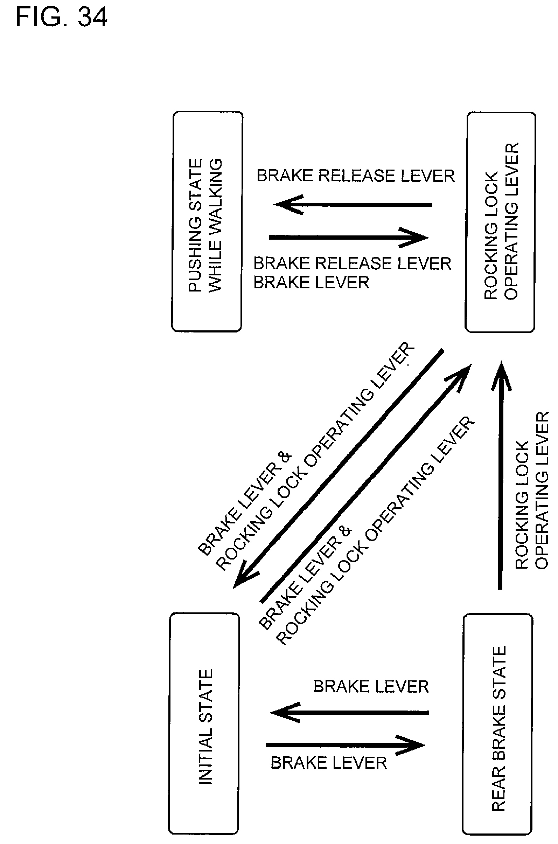

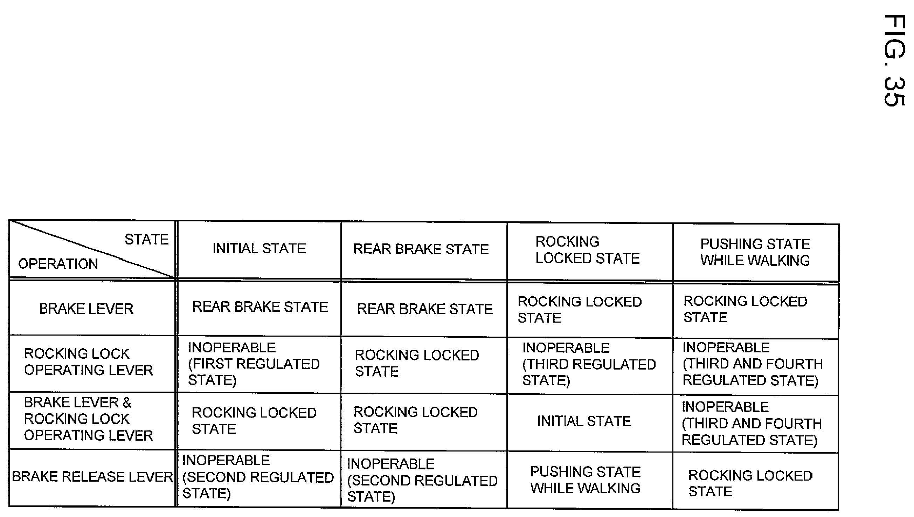

Fig. 34 shows transition among each state of the inhibitor 142. Fig. 35 id a table showing results when each operation is performed in each state of the inhibitor 142.

As shown in Figs. 34 and 35, in the initial state, the rocking lock operating lever 130 cannot be operated because of the first regulated state and the brake release lever 143 cannot be operated because of the second regulated state.

In the initial state, when the brake lever 123b is operated in the parking position, the rear wheel 3 is locked by the rear brake mechanism 141 and the initial state is turned the rear brake state.

In the rear brake state, when the parking position of the brake lever 123b is released, the rear brake state is restored to the initial state.

In the rear brake state, as the first regulated state is released by the movement of the rear brake interlocking member 150, the rocking lock operating lever 130 can be operated in the rocking lock position and the rear brake state is turned the rocking locked state by this operation. That is, in the initial state, only when the brake lever 123b and the rocking lock operating lever 130 are operated in order, the initial state can be chung to the rocking locked state. Therefore, when the initial state is chung to the rocking locked state and the rocking of the rocking vehicle 10 is regulated, the rear wheel 3 is necessarily locked. Therefore, the rocking vehicle 10 can be suitably parked.

Besides, in the rear brake state, the brake release lever 143 cannot be operated because of the second regulated state.

In the rocking locked state, the rocking locked state is restored to the initial state by releasing the operation of the brake lever 123b and the operation of the rocking lock operating lever 130 in order.

Moreover, as the third regulated state occurs in the rocking locked state, the release of only the rocking lock position of the rocking lock operating lever 130 is disenabled. Therefore, only the regulation of the rocking of the rocking vehicle 10 can be prevented from being released in the rocking locked state.

Further, in the rocking locked state, when the brake release lever 143 is operated in the brake release position, the rocking locked state is turned the pushing state while walking. That is, to turn to the pushing state while walking in which only the rocking of the rocking vehicle 10 is regulated, the rocking locked state in which both the rocking of the rocking vehicle 10 and the rotation of the rear wheel 3 are regulated is required to be passed. In the pushing state while walking, the rocking lock position of the rocking lock operating lever 130 cannot be released by the third regulated state and the fourth regulated state and the pushing state while walking cannot be restored to the initial state by operating only the rocking lock operating lever 130.

To restore the pushing state while walking to the initial state, the pushing state while walking is once turned the rocking locked state by operating the brake lever 123b or the brake release lever 143 and then, the brake lever 123b and the rocking lock operating lever 130 are required to be operated in order. That is, in the pushing state while walking, the regulation of the rocking of the rocking vehicle 10 cannot be released without once turning the pushing state while walking the rocking locked state and stopping the longitudinal movement of the rocking vehicle 10.

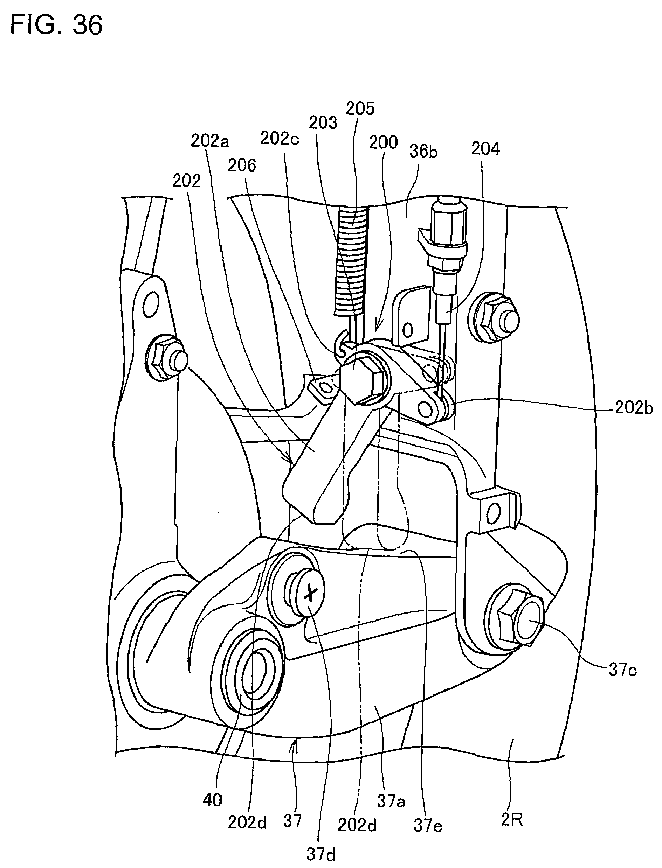

Fig. 36 is a perspective view showing the structure of circumferential parts of the link type suspension mechanism 37 on the sides of the front wheels 2L, 2R. In Fig. 36, the shock absorber 37b (see Fig. 3) is not shown.

A rear end of the bottom link 37a is joumaled to the lower end of the support arm 36b by a link supporting shaft 37c extended in the vehicle width direction. A lower end of the shock absorber 37b is coupled to a shock absorber coupling part 37d at the front end of the bottom link 37a.

The link type suspension mechanism 37 is vertically swung with the link supporting shaft 37c in the center and according to the rocking, the shock absorber 37b is axially reciprocated.

The rocking vehicle 10 is provided with a suspension lock mechanism 200 that stops strokes of the link type suspension mechanism 37.

The suspension lock mechanism 200 is provided with a suspension lock operating lever (a suspension lock operating part, see Fig. 11) 201 to which the operation of the user is input, a regulating arm (a suspension lock operating part) 202 arranged on the upside of the bottom link 37a, an arm supporting shaft 203 that journals the regulating arm 202, a suspension lock operation cable 204 that connects the regulating arm 202 and the suspension lock operating lever 201, an energizing member 205 that energizes a turn of the regulating arm 202 and a stopper 206 that regulates a turning position of the regulating arm 202.

In the suspension lock mechanism 200, a pair of right and left regulating arms 202 and others are provided so that strokes of a pair of right and left suspension mechanisms 37 can be respectively stopped by the operation of the suspension lock operating lever 201, however, the right one will be described for an example below.

The arm supporting shaft 203 is fixed to a front face of the support arm 36b with the arm supporting shaft longitudinally directed. An upper end of the regulating arm 202 is journaled to the arm supporting shaft 203 and the regulating arm can be laterally swung with the arm supporting shaft 203 in the center. The regulating arm 202 is arranged between the shock absorber 37b and the support arm 36b.

The regulating arm 202 is provided with a body 202a of the arm extended downward from the side of the arm supporting shaft 203, an operation cable connecting part 202b protruded in the vehicle width direction from an upper end of the arm body 202a and an energizing member connecting part 202c protruded on the reverse side of the operation cable connecting part 202b from the upper end of the arm body 202a.

One end of the suspension lock operation cable 204 is connected to the operation cable connecting part 202b. The other end of the suspension lock operation cable 204 is connected to the suspension lock operating lever 201.

One end of the energizing member 205 which is a coil spring is connected to the energizing member connecting part 202c. The other end of the energizing member 205 is connected to the support arm 36b.

The regulating arm 202 is pressed by the energizing member 205 and in a state in which the suspension lock operation cable 204 is not operated, the regulating arm is turned inside in the vehicle width direction and is hit on the stopper 206. In this state, a lower end 202d of the arm body 202a is located in a position off a top face 37e of the bottom link 37a in the vehicle width direction.

When the operation cable connecting part 202b is pulled by the suspension lock operation cable 204, the regulating arm 202 is turned in the vehicle width direction against the energizing member 205 as shown by a virtual line and the lower end 202d is brought close to the top face 37e of the bottom link 37a.

That is, when the suspension lock operating lever 201 is operated up to a suspension lock position, the regulating arm 202 is turned by the suspension lock operation cable 204 and the lower end 202d is brought close to the top face 37e of the bottom link 37a. That is, when the shock absorber 37b is about to return, the lower end 202d abuts on the top face 37e of the bottom link 37a. Hereby, an upward turn of the bottom link 37a is regulated by the regulating arm 202 and a stroke of the shock absorber 37b is regulated. Besides, when the suspension lock position of the suspension lock operating lever 201 is released, the regulating arm 202 is returned to an original position and locking by the suspension lock mechanism 200 is released.

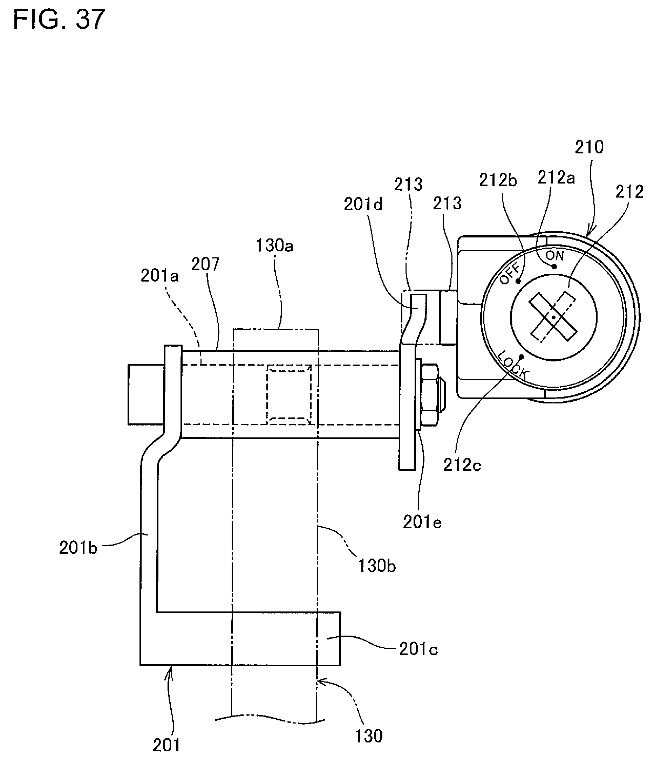

Fig. 37 shows the configuration of the suspension lock operating lever 201 and its circumferential parts.

As shown in Figs. 11 and 37, the cylindrical lever supporting part 207 extended in the vehicle width direction is provided to the body frame 11 inside the leg shield 112. The suspension lock operating lever 201 and the rocking lock operating lever 130 are supported by the lever supporting part 207.

A key cylinder 210 for turning on/off a main electric power source of the rocking vehicle 10 is provided in a position outside the suspension lock operating lever 201 and the rocking lock operating lever 130 in the vehicle width direction. The key cylinder 210 is arranged inside the leg shield 112 and a key insertion slot 212 into which a key 211 for operation is inserted is exposed backward from an opening of the leg shield 112.

The key cylinder 210 is provided with an ON position 212a in which the main electric power source is turned on, an OFF position 212b in which the main electric power source is turned off and a lock position 212c in which a steered position of the handlebar 42 is locked as a turned position. When the turned position is the lock position 212c, the key 211 is locked by a key lock mechanism (not shown) built in the key cylinder 210 and the extraction from the key cylinder 210 is disenabled.

The key cylinder 210 is provided with a protruded member 213 which can be advanced outside and can be retracted inside in interlock with a turned position by the key 211 of the key cylinder 210. The protruded member 213 is formed in the shape of a bar and is extended from the side of the key cylinder 210 to the side of the suspension lock operating lever 201 in the vehicle width direction.

Detailedly, the protruded member 213 is housed inside the key cylinder 210 in a state in which the turned position is the ON position 212a and the OFF position 212b. The protruded member 213 is protruded outside as shown by a virtual line in a state in which the turned position is the lock position 212c.

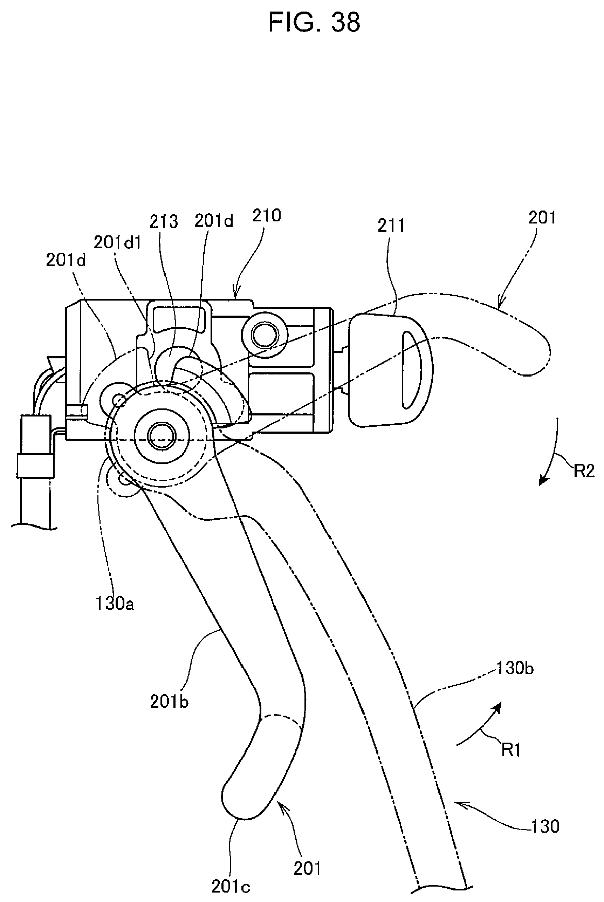

Fig. 38 is a side view showing the suspension lock operating lever 201 and the key cylinder 210. In Fig. 38, the rocking lock operating lever 130 is shown by a virtual line.

The suspension lock operating lever 201 is provided with a spindle 201a supported by the lever supporting part 207, a body 201b of the lever extended in a direction substantially perpendicular to the spindle 201 a, a handle part 201c made wider than the lever body 201b and a protrusion regulating part 201d arranged in the vicinity of the key cylinder 210. The spindle 201a and the handle part 201c are extended long in the vehicle width direction.

The spindle 201a is inserted inside the lever supporting part 207 from an end on the reverse side to the key cylinder 210 of the lever supporting part 207 and an end 201e of the spindle 201a is protruded on the side of the key cylinder 210 from an end on the side of the key cylinder 210 of the lever supporting part 207.

The protrusion regulating part 201d is a plate protruded outside in a radial direction of the spindle 201a and is integrally fixed to the end 201e of the spindle 201a. Therefore, when the suspension lock operating lever 201 is operated, the protrusion regulating part 201d is turned integrally with the suspension lock operating lever 201.

As shown in Fig. 38, in a side view, the protrusion regulating part 201d is arranged so that the protrusion regulating part is overlapped with the protruded member 213 of the key cylinder 210 from the inside in the vehicle width direction.

Besides, as shown in Fig. 37, in a state in which the protruded member 213 is protruded as shown by a virtual line when the key insertion slot 212 is viewed from the front side, the protruded member 213 and the protrusion regulating part 201d are overlapped. That is, the protruded member 213 is arranged on a turning locus of the protrusion regulating part 201d.

The rocking lock operating lever 130 is provided with a coupling part 130a joumaled to the lever supporting part 207, a lever extended part 130b extended from the coupling part 130a and a grasping part 130c formed wide at an end of the lever extended part 130b. The lever extended part 130b is formed so that it is longer than the body 201b of the suspension lock operating lever 201.

The rocking lock operating lever 130 is joumaled to the lever supporting part 207 by fitting the coupling part 130a to the periphery of the lever supporting part 207. That is, the rocking lock operating lever 130 is supported coaxially with the suspension lock operating lever 201 by the lever supporting part 207 and turning directions of the rocking lock operating lever 130 and the suspension lock operating lever 201 are the same.

The lever extended part 130b of the rocking lock operating lever 130 is arranged between the lever body 201b of the suspension lock operating lever 201 and the protrusion regulating part 201d in the vehicle width direction and is extended substantially in parallel with the lever body 201b.

Detailedly, as shown in Figs. 11 and 37, when the lever extended part 130b of the rocking lock operating lever 130 is viewed from a direction perpendicular to an axial direction of the lever supporting part 207, a part is overlapped with the handle part 201c of the suspension lock operating lever 201. That is, the lever extended part 130b is located on a turning locus of the handle part 201c.

In Figs. 11 and 38, the suspension lock mechanism 200 and the rocking lock mechanism 90 are in a released state, and the rocking lock operating lever 130 and the suspension lock operating lever 201 are in an unoperated state. When the rocking lock operating lever 130 is turned in an actuating direction R1 (see Fig. 38) from this state, the rocking lock mechanism 90 is actuated and when the suspension lock operating lever 201 is turned in the actuating direction R1 and is turned up to the suspension lock position shown by a virtual line, the suspension lock mechanism 200 is actuated. That is, the actuating directions R1 of the rocking lock operating lever 130 and the suspension lock operating lever 201 are the same. Besides, a releasing direction R2 for releasing the suspension lock operating lever 201 and the rocking lock operating lever 130 from the suspension lock position and the rocking lock position is a direction reverse to the actuating direction R1.

In the unoperated state of the rocking lock operating lever 130 and the suspension lock operating lever 201, the rocking lock operating lever 130 is located in a turning position a little in advance of the suspension lock operating lever 201 in the actuating direction R1 and the lever extended part 130b is located on the turning locus of the handle part 201c.

That is, the rocking lock operating lever 130 is arranged in a position for preventing the operation of the suspension lock operating lever 201 in the actuating direction R1. Therefore, unless the rocking lock operating lever 130 is first operated in the actuating direction R1, the suspension lock operating lever 201 cannot be operated in the actuating direction R1 to reach the suspension lock position.

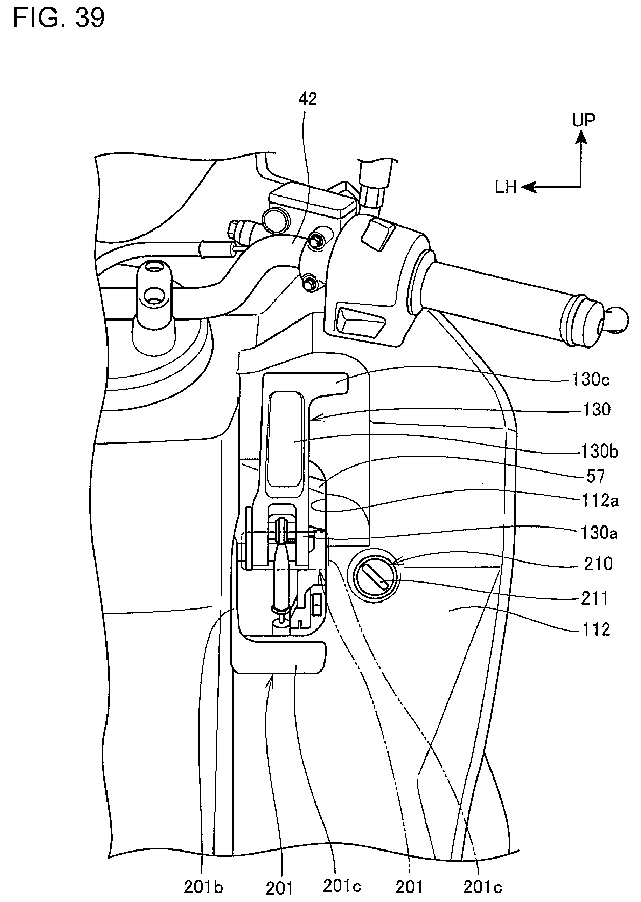

One example of a procedure for parking the rocking vehicle 10 will be described below. Fig. 39 shows a state in which the rocking lock operating lever 130 is located in the rocking lock position.

First, the rocking vehicle 10 is stopped and the key 211 is set to the OFF position 212b. In this state, the lock mechanism 140 is in "the initial state". In the initial state, the rocking lock operating lever 130 and the suspension lock operating lever 201 are in the unoperated state and as shown in Fig. 38, the protrusion regulating part 201d is overlapped with the protruded member 213 in a protruded direction. Hereby, as the protruded member 213 is prevented from being protruded by the protrusion regulating part 201 d even if setting the key 211 to the lock position 212c is tried, the key 211 cannot be set to the lock position 212c. Accordingly, the key 211 cannot be extracted.

Next, the brake lever 123b and the rocking lock operating lever 130 are operated in order and the lock mechanism 140 is turned "the rocking locked state" via "the rear brake state". Hereby, as shown in Fig. 39, as the rocking lock operating lever 130 is turned in the actuating direction R1 and is located in the rocking lock position, the operation in the actuating direction R1 of the suspension lock operating lever 201 is enabled. Besides, in this state, the key 211 is located in the OFF position 212b, the protruded member 213 is not protruded, and a turn in the actuating direction R1 of the suspension lock operating lever 201 is not prevented.

Next, the suspension lock operating lever 201 is operated in the actuating direction R1, is located in the suspension lock position as shown by a virtual line in Fig. 38, and a stroke of the link type suspension mechanism 37 is stopped. In this state, as shown by the virtual line in Fig. 38, the protrusion regulating part 201d is turned in the actuating direction R1 and is moved in a position in which the part is not overlapped with the protruded member 213. Therefore, the key 211 can be set to the lock position 212c and the key 211 can be also extracted.

That is, in this embodiment, except "the rocking locked state" and a state in which a stroke of the link type suspension mechanism 37 is stopped, the key 211 cannot be extracted. Therefore, in parking, the user can be urged to turn "the rocking locked state" and the state in which a stroke of the link type suspension mechanism 37 is stopped and the rocking vehicle 10 can be suitably parked.

Besides, in the parked state as described above, as the protrusion regulating part 201d is turned a state in which it is protruded, an end 201d1 of the protrusion regulating part 201d abuts on the side of the protruded member 213 when a turn in the releasing direction R2 of the suspension lock operating lever 201 is tried. Therefore, in parking, a person except an owner of the key 211 can be prevented from operating the suspension lock operating lever 201 in the releasing direction R2.

Moreover, in this state, as the handle part 201c of the suspension lock operating lever 201 prevents the operation in the releasing direction R2 of the rocking lock operating lever 130, the rocking lock operating lever 130 cannot be also released. Therefore, in parking, the suspension lock operating lever 201 and the rocking lock operating lever 130 can be prevented from being released, the rocking vehicle can be suitably parked, and the robbery of the rocking vehicle 10 can be inhibited.

To release the parked state, the locked state has only to be released by turning the key cylinder 201 the ON position 212a or the OFF position 212b by the key 211, releasing the protrusion of the protrusion regulating part 201d and afterward, turning the suspension lock operating lever 201 and the rocking lock operating lever 130 in the releasing direction R2. In this embodiment, as the rocking lock operating lever 130 cannot be also released if the suspension lock operating lever 201 is not released, a state in which a stroke of the link type suspension mechanism 37 is stopped can be prevented from being maintained though the rocking locked state is released.

As described above, according to this embodiment to which the present invention is applied, the rocking vehicle 10 is provided with the rear brake mechanism 141 that locks the rear wheel 3, the rocking lock mechanism 90 that locks the rocking of the rocker mechanism 64 for rocking the vehicle body, the rear brake interlocking member 150 that connects the brake lever 123b of the rear brake mechanism 141 and the drum 123a via the operating-side cable 152 and the actuating-side cable 153 and the rocking lock interlocking member 151 that connects the rocking lock operating lever 130 of the rocking lock mechanism 90 and the caliper 92 via the link 146 and the rocking lock operation cable 131, and the rear brake interlocking member 150 regulates the movement in the rocking lock actuating direction Ds1 of the rocking lock interlocking member 151 in a state in which the brake lever 123b is located in the position other than the parking position. Hereby, in a state in which the brake lever 123b is located in the position other than the parking position, the movement in the rocking lock actuating direction Ds1 of the rocking lock interlocking member 151 can be mechanically regulated by the rear brake interlocking member 150. Therefore, the interlock mechanism that regulates each operation of the rear brake mechanism 141 and the rocking lock mechanism 90 can be realized with a simple structure.

Besides, the case 154 that houses the rear brake interlocking member 150 and the rocking lock interlocking member 151 is provided, the case 154 is provided with the rear brake interlocking member housing 174 and the rocking lock interlocking member housing 175 that respectively guide the movement of the rear brake interlocking member 150 and the rocking lock interlocking member 151, and the case regulates the movement of the rear brake interlocking member 150 and the movement of the rocking lock interlocking member 151. Hereby, as the movement of the rear brake interlocking member 150 and the movement of the rocking lock interlocking member 151 can be regulated utilizing the case 154 including the rear brake interlocking member 150 and the rocking lock interlocking member 151, the interlock mechanism can be realized with a simple structure.

Moreover, the rear brake interlocking member 150 and the rocking lock interlocking member 151 are arranged so that the moving direction Db and the moving direction Ds which are respectively the moving direction in operation are crossed, the rear brake interlocking member 150 is provided with the movement regulating part 182 located on the course in the rocking lock actuating direction Ds1 of the rocking lock interlocking member 151 in a state in which the brake lever 123b is located in the position other than the parking position, the rear brake interlocking member 150 is moved in a state in which the brake lever 123b is located in the parking position, and the movement regulating part 182 is off the course. Hereby, a position of the movement regulating part 182 can be chung by the movement of the rocking lock interlocking member 151 and in a state of the parking position, as the movement regulating part 182 is off the course of the rocking lock interlocking member 151, the rocking lock interlocking member 151 can be moved in the rocking lock actuating direction Ds1. Therefore, the interlock mechanism can be realized with a simple structure.

Further, in a state in which the brake lever 123b is located in the parking position and the rocking lock operating lever 130 is located in the rocking lock position (in the rocking locked state), the rear brake interlocking member 150 regulates the movement in the rocking lock releasing direction Ds2 of the rocking lock interlocking member 151. Therefore, in a state in which both the rear brake mechanism 141 and the rocking lock mechanism 90 are operated, it can be regulated by the rear brake interlocking member 150 that the rocking lock mechanism 90 is released and the interlock mechanism can be realized with a simple structure.

Furthermore, the movement in the rocking lock releasing direction Ds2 of the rocking lock interlocking member 151 can be regulated with a simple configuration that the locking part 183a of the brake lever 123b is locked in the locked part 194b of the rocking lock interlocking member 151.

Furthermore, the brake release lever 143 that releases a lock of the rear wheel 3 by the rear brake mechanism 141 in a state in which the brake lever 123b is located in the parking position and the rocking lock operating lever 130 is located in the rocking lock position (in the rocking locked state) is provided. Hereby, only the rear brake mechanism 141 is released and the rocking vehicle 10 can be pushed while the user is walking by operating the brake release lever 143 in a state in which both the rear brake mechanism 141 and the rocking lock mechanism 90 are operated.

Furthermore, the housing 155 which houses the rear brake interlocking member 150 and the rocking lock interlocking member 151 and which is provided with the rear brake interlocking member housing 174 and the rocking lock interlocking member housing 175 for respectively guiding the movement of the rear brake interlocking member 150 and the rocking lock interlocking member 151 is provided, the brake release operating part is connected to the housing 155, and when the brake release lever 143 is operated, the rear brake interlocking member 150 is moved in the rear brake releasing direction Db2 integrally with the housing 155. Hereby, a lock of the rear wheel 3 can be released by moving the housing 155 by the brake release lever 143 and the lock of the rear wheel 3 can be released without operating the brake lever 123b.

Further, the body 156 of the case that houses the housing 155 is provided, the case body 156 is provided with the opening 170 which the position regulating projection 191 protruded from the rocking lock interlocking member 151 passes is provided, and the movement of the housing 155 by the operation of the brake release lever 143 is regulated by making the position regulating projection 191 abut on the opening 170. Hereby, the operation of the brake release lever 143 can be regulated with a simple configuration that the case body 156 and the position regulating projection 191 of the rocking lock interlocking member 151 are made to abut.

Furthermore, in a state in which a lock of the rear wheel 3 by the rear brake mechanism 141 is released by the brake release lever 143, the movement in the rocking lock releasing direction Ds2 of the rocking lock interlocking member 151 is regulated. Hereby, the rocking lock mechanism 90 can be prevented from being released in a state in which the rocking lock mechanism 90 is operated and the rocking vehicle 10 can be pushed while walking.

Furthermore, the case body 156 is provided with the opening 170 which the position regulating projection 191 of the rocking lock interlocking member 151 passes and the movement in the rocking lock releasing direction Ds2 of the rocking lock interlocking member 151 is regulated by making the position regulating projection 191 abut on the opening 170. Hereby, the operation of the rocking lock operating lever 130 can be regulated with a simple configuration that the case body 156 and the position regulating projection 191 of the rocking lock interlocking member 151 are made to abut.

Furthermore, according to this embodiment to which the present invention is applied, the rocking vehicle 10 is provided with the suspension lock mechanism 200 that stops a stroke of the link type suspension mechanism 37 of the vehicle, the rocking lock mechanism 90 that locks a rocking of the rocker mechanism 64 that rocks the vehicle body, the suspension lock operating lever 201 that operates the suspension lock mechanism 200 and the rocking lock operating lever 130 that operates the rocking lock mechanism 90, and the rocking lock operating lever 130 is arranged so that it prevents the operation of the suspension lock operating lever 201 in a lever position while the rocking lock operating lever 130 is unoperated. Hereby, when the rocking lock operating lever 130 is located in the lever position while it is unoperated, the operation of the suspension lock operating lever 201 is prevented by the existence of the rocking lock operating lever 130. That is, the suspension lock operating lever 201 can be operated only after the rocking lock operating lever 130 is operated. Therefore, the suspension lock mechanism 200 can be turned unoperated independent of the rocking lock mechanism 90 with a simple structure utilizing the rocking lock operating lever 130.

Furthermore, the suspension lock operating lever 201 is provided with the spindle 201a, the body 201b extended from the spindle 201 and the handle part 201c formed wider than the body 201b, and the rocking lock operating lever 130 is arranged so that it covers at least the handle part 201c in the lever position while it is unoperated. Hereby, the operation of the handle part 201c of the suspension lock operating lever 201 can be prevented by the rocking lock operating lever 130. Therefore, the suspension lock mechanism 200 can be prevented from being operated independent of the rocking lock mechanism 90 with a simple structure.

Furthermore, the key cylinder 210 of the rocking vehicle 10 is provided with the protruded member 213 protruded from the key cylinder 210 when the key 211 is set in an extractable position and the suspension lock operating lever 201 is provided with the protrusion regulating part 201 d that regulates the protrusion of the protruded member 213 in the operation position while the suspension lock mechanism 200 is unoperated. Hereby, when the suspension lock operating lever 201 is located in the operation position while the suspension lock mechanism 200 is unoperated, the protrusion of the protruded member 213 of the key cylinder 210 is regulated by the protrusion regulating part 201d and the key 211 cannot be extracted. Therefore, the extraction of the key 211 can be made impossible until the suspension lock mechanism 200 is operated.

Further, as the suspension lock operating lever 201 and the rocking lock operating lever 130 are coaxially supported, the suspension lock operating lever 201 and the rocking lock operating lever 130 can be supported by a simple structure, the suspension lock operating lever 201 and the rocking lock operating lever 130 can be arranged mutually close, and they can be compacted.

The above-mentioned embodiment shows one aspect to which the present invention is applied and the present invention is not limited to the embodiment.

In the embodiment, the brake actuating part is described using the drum 123a for an example, however, the present invention is not limited to this and the brake actuating part has only to be a part which is actuated by the operation of the brake operating part and locks a wheel. For example, the brake actuating part may be also a brake caliper of a disc brake mechanism. Besides, in the embodiment, the brake mechanism is described using the rear brake mechanism 141 that locks the rotation of the rear wheel 3 for an example, however, the present invention is not limited to this and the brake mechanism may be also a front brake mechanism that locks the rotation of a front wheel.

Moreover, in the embodiment, the rocking lock mechanism is described using the disc plate 91 and the caliper 92 for an example, however, the rocking lock mechanism may be also any mechanism which can lock the rocking of the rocker mechanism 64.

In addition, in the embodiment, the suspension lock mechanism 200 is described using a configuration that the movement of the bottom link 37a is regulated by the regulating arm 202 for an example, however, a suspension lock mechanism can be realized by various configurations and the configuration of the suspension lock mechanism is not limited to the suspension lock mechanism 200.

Further, in the embodiment, the rocking lock operating lever 130 is described as the one arranged with it covering the handle part 201c in the lever position while it is unoperated, however, the present invention is not limited to this, and for example, the rocking lock operating lever may be also configured so that it also covers the body 201b of the lever.

Furthermore, in the embodiment, the power unit is described using the engine for an example, however, the present invention is not limited to this, and for example, a power unit using an electric motor driven by a battery may be also used.

Furthermore, in the embodiment, the rocking vehicle is described using the three-wheeled vehicle provided with the front wheels 2L, 2R and one rear wheel for an example, however, the present invention is not limited to this, and for example, a four-wheel rocking vehicle provided with two rear wheels may be also applied to the present invention.

### List

- 3: Rear wheel (Wheel)
- 10: Rocking vehicle
- 64: Rocker mechanism
- 90: Rocking lock mechanism
- 92: Caliper (Rocking lock actuating part)
- 123a: Drum (Brake actuating part)
- 123b: Brake lever (Brake operating part)
- 130: Rocking lock operating lever (Rocking lock operating part)
- 131: Rocking lock operation cable (Relay member)
- 141: Rear brake mechanism (Brake mechanism)
- 143: Brake release lever (Brake release operating part)
- 146: Link (Relay member)
- 150: Rear brake interlocking member (Brake interlocking member)
- 151: Rocking lock interlocking member
- 152: Operating-side cable (Relay member)
- 153: Actuating-side cable (Relay member)
- 154: Case
- 155: Housing
- 156: Case body
- 170: Opening
- 174: Rear brake interlocking member housing (Guide part)
- 175: Rocking lock interlocking member housing (Guide part)
- 182: Movement regulating part
- 183a: Locking part
- 191: Position regulating projection
- 194b: Locked part
- Db, Ds: Moving direction
- Db2: Rear brake releasing direction (Brake releasing direction)
- Ds1: Rocking lock actuating direction
- Ds2: Rocking lock releasing direction

## Claims

1. A rocking vehicle comprising:
a brake mechanism (141) that locks a wheel (3); and
a rocking lock mechanism (90) that locks a rocking of a rocker mechanism (64) which rocks a vehicle body,
wherein the rocking vehicle is further provided with:
a brake interlocking member (150) that connects a brake operating part (123b) of the brake mechanism (141) and a brake actuating part (123a) via respective relay members (152,153); and
a rocking lock interlocking member (151) that connects a rocking lock operating part (130) of the rocking lock mechanism (90) and a rocking lock actuating part (92) via respective relay members (146,131), and
the brake interlocking member (150) regulates the movement in a rocking lock actuating direction (Ds1) of the rocking lock interlocking member (151) in a state in which the brake operating part (123b) is located in a position other than a parking position.

2. The rocking vehicle according to Claim 1, further comprising:
a case (154) that houses the brake interlocking member (150) and the rocking lock interlocking member (151),
wherein: the case (154) is provided with guide parts (174, 175) that respectively guide the movement of the brake interlocking member (150) and the rocking lock interlocking member (151); and
the case (154) regulates the movement of the brake interlocking member (150) and the movement of the rocking lock interlocking member (151).

3. The rocking vehicle according to Claim 1 or 2,
wherein: the brake interlocking member (150) and the rocking lock interlocking member (151) are arranged with respective moving directions (Db, Ds) when they are operated crossing;
the brake interlocking member (150) is provided with a movement regulating part (182) located on a course in the rocking lock actuating direction (Ds1) of the rocking lock interlocking member (151) in a state in which the brake operating part (123b) is located in the position other than the parking position; and
in a state in which the brake operating part (123b) is located in the parking position, the brake interlocking member (150) is moved and the movement regulating part (182) is off the course.

4. The rocking vehicle according to any of Claims 1 to 3,
wherein, in a state in which the brake operating part (123b) is located in the parking position and the rocking lock operating part (130) is located in a rocking lock position, the brake interlocking member (150) regulates the movement in a rocking lock releasing direction (Ds2) of the rocking lock interlocking member (151).

5. The rocking vehicle according to Claim 4,
wherein the movement in the rocking lock releasing direction (Ds2) of the rocking lock interlocking member (151) is regulated by locking a locking part (183a) of the brake operating part (123b) in a locked part (194b) of the rocking lock interlocking member (151).

6. The rocking vehicle according to any of Claims 1 to 5, further comprising:
a brake release operating part (143) that releases a lock of the wheel (3) by the brake mechanism (141) in a state in which the brake operating part (123b) is located in the parking position and the rocking lock operating part (130) is located in the rocking lock position.

7. The rocking vehicle according to Claim 6, further comprising:
a housing (155) which houses the brake interlocking member (150) and the rocking lock interlocking member (151) and which is provided with guide parts (174,175) that respectively guide the movement of the brake interlocking member (150) and the rocking lock interlocking member (151), the housing (155) being connected to the brake release operating part (143),
wherein, when the brake release operating part (143) is operated, the brake interlocking member (150) is moved in a brake releasing direction (Db2) integrally with the housing (155).

8. The rocking vehicle according to Claim 7, further comprising:
a case body (156) that houses the housing (155),
wherein the case body (156) is provided with an opening (170) which a position regulating projection (191) protruded from the rocking lock interlocking member (151) passes, and
the movement of the housing (155) by the operation of the brake release operating part (143) is regulated by making the position regulating projection (191) abut on the opening (170).

9. The rocking vehicle according to Claim 6,
wherein, in a state in which a lock of the wheel (3) by the brake mechanism (141) is released by the brake release operating part (143), the movement in the rocking lock releasing direction (Ds2) of the rocking lock interlocking member (151) is regulated.

10. The rocking vehicle according to Claim 9, further comprising:
a housing (155) which houses the brake interlocking member (150) and the rocking lock interlocking member (151) and which is provided with guide parts (174,175) that respectively guide the movement of the brake interlocking member (150) and the rocking lock interlocking member (151); and
a case body (156) that houses the housing (155),
wherein: the case body (156) is provided with an opening (170) which a position regulating projection (191) protruded from the rocking lock interlocking member (151) passes; and
the movement in the rocking lock releasing direction (Ds2) of the rocking lock interlocking member (151) is regulated by making the position regulating projection (191) abut on the opening (170).
